# EUROPÄISCHE PATENTSCHRIFT

(11) **EP 2 868 587 B1**
(45) Veröffentlichungstag und Bekanntmachung des Hinweises auf die Patenterteilung: **19.10.2016**
(21) Anmeldenummer: 14181345.1
(22) Anmeldetag: 19.08.2014
(51) Int. Cl.: B65B 35/04, B65B 35/36, B65B 57/14, B65B 5/08, B65B 5/10, B29C 45/17, B65G 29/02, B65G 47/06, B65G 60/00, B29L 31/00, B29C 45/42, B23Q 7/00, B23Q 7/04, B23Q 7/10

(54) **VERPACKUNGSVERFAHREN, VERPACKUNGSVORRICHTUNG SOWIE SPRITZGUSSANLAGE MIT VERPACKUNGSVORRICHTUNG**
PACKAGING METHOD, PACKAGING DEVICE, AND INJECTION MOLDING MACHINE WITH PACKAGING DEVICE
PROCÉDÉ D'EMBALLAGE, DISPOSITIF D'EMBALLAGE ET INSTALLATION DE MOULAGE PAR INJECTION ÉQUIPÉE DE DISPOSITIF D'EMBALLAGE

(30) Priorität: 30.10.2013 DE 102013111965
(43) Veröffentlichungstag der Anmeldung: 06.05.2015
(73) Patentinhaber: Waldorf Technik GmbH & Co. KG, 78234 Engen (DE)
(72) Erfinder: Czizegg, Wolfgang, 78256 Steisslingen (DE); Boos, Christian, 79194 Gundelfingen (DE)
(74) Vertreter: Wagner, Kilian

(56) Entgegenhaltungen:
- EP-A2- 1 250 978
- EP-B1- 2 323 930
- US-A- 5 503 516
- US-B2- 6 925 774
- HANK F: "KLEINTEILE PALETTIEREN UND SPEICHERN", FEINWERKTECHNIK + MESSTECHNIK, HANSER, MUNCHEN, DE, Bd. 98, Nr. 1/02, 1. Januar 1990 (1990-01-01), Seite 51/52, XP000094902, ISSN: 0340-1952

## Beschreibung

Die Erfindung betrifft ein Verpackungsverfahren zum Verpacken von als Pipettenspitzen oder medizinische Reaktionsgefäße ausgebildeten Spritzgussteilen gemäß dem Oberbegriff des Anspruchs 1 sowie eine Verpackungsvorrichtung gemäß dem Oberbegriff des Anspruchs 7 zum Verpacken von als Pipettenspitzen oder medizinische Reaktionsgefäße ausgebildeten Kunststoffspritzgussteilen. Ferner betrifft die Erfindung eine Spritzgussanlage mit einer derartigen Verpackungsvorrichtung, wobei die Spritzgussanlage zur Herstellung von als Pipettenspitzen oder medizinische Reaktionsgefäße ausgebildeten Kunststoffspritzgussteilen ausgebildet ist.

Bei bekannten Verpackungsverfahren zum Verpacken von als Pipettenspitzen oder medizinische Reaktionsgefäße, insbesondere zur Blutanalyse, ausgebildeten Kunststoffspritzgussteilen werden gleichzeitig K Kunststoffspritzgussteile aus K Kavitäten einer Spritzgussvorrichtung entnommen und als Schüttgut zwischengespeichert. Aus diesem Zwischenspeicher werden dann Endverpackungseinheiten jeweils mit A Kunststoffspritzgussteilen beladen. Nachteilig bei dem bekannten Verfahren ist, dass keine Zuordnung der abgepackten Kunststoffspritzgussteile zu bestimmtem Kavitäten möglich ist. Es ist also nicht mehr nachvollziehbar, aus welcher Kavität bzw. aus welchen Kavitäten die Kunststoffspritzgussteile einer bestimmten Endverpackungseinheit stammen. Dies führt bei nur einem einzigen fehlerhaften Kunststoffspritzgussteile in einer Endverpackungseinheit dazu, dass die gesamte Produktion zurückgerufen werden muss und nicht nur die mit Kunststoffspritzgussteilen aus einer bestimmten Kavität bzw. aus bestimmten Kavitäten bestückten Endverpackungseinheiten.

Ein bezüglich des vorstehend geschilderten Problems verbessertes Verpackungsverfahren sieht vor, die als Pipettenspitzen oder medizinische Reaktionsgefäße ausgebildeten Kunststoffspritzgussteile ohne Ablage in einem Zwischenspeicher unmittelbar, d.h. ohne Zwischenspeicherung aus den Kavitäten in die Endverpackungseinheiten zu überführen. Hierzu werden die Kunststoffspritzgussteile über Schläuche zu den Endverpackungseinheiten gefördert. Nachteilig hierbei ist, dass die Anzahl A von in eine Endverpackungseinheit zu befördernden Kunststoffspritzgussteilen der Anzahl K Kavitäten entsprechen muss oder dass die Anzahl A von in eine Endverpackungseinheit zu überführenden Kunststoffspritzgussteilen ein ganzteiliges Vielfaches von K Kavitäten sein muss. Insbesondere nachteilig bei einer derartigen Anlage ist der enorme Raumbedarf für das Schlauchpakte und die vergleichsweise langsame Zykluszeit.

Ein hinsichtlich des vorstehenden Problems verbessertes Verpackungsverfahren sowie eine zugehörige Verpackungsvorrichtung hat die Anmelderin in der EP 2 323 930 B1 beschrieben. Das verbesserte Verfahren sieht vor, dass die gleichzeitig aus den K Kavitäten entnommenen K Kunststoffspritzgussteile unmittelbar nach der Entnahme gleichzeitig auf U Untergruppen verteilt in einem Zwischenspeicher abgelegt werden und dass mehrfach und solange K Kunststoffspritzgussteile aus den K Kavitäten entnommen und gleichzeitig auf die U Untergruppen in dem Zwischenspeicher verteilt werden, bis jede Untergruppe L Kunststoffspritzgussteile aufweist, wobei die Anzahl L der Kunststoffspritzgussteile einer Untergruppe der Anzahl A von in einer Endverpackungseinheit maximal zu ladenden Kunststoffspritzgussteilen oder einem ganzzahligen Teiler von A entspricht. Dieses Verfahren hat sich bewährt; es bestehen jedoch Bestrebungen, die Zykluszeiten des Verpackungsverfahrens zum Verpacken von als Pipettenspitzen oder medizinische Reaktionsgefäße ausgebildeten Kunststoffspritzgussteilen zu verkürzen. Darüber hinaus bestehen Bestrebungen, den Flächenbedarf der Verpackungseinrichtung zu optimieren.

Aus Hank F: "Kleinteile palettieren und speichern", Feinwerktechnik + Messtechnik, Hanser, München, DE; der US 6 925 774 B2; der EP 1 250 978 A2 und der US 5 503 516 A ist allgemein die Anordnung von Teilen in unterschiedlichen Höhen bekannt, wobei in den letztgenannten drei Dokumenten höhenverstellbare Tische beschrieben sind.

Ausgehend von dem vorgenannten Stand der Technik liegt der Erfindung die Aufgabe zugrunde, ein hinsichtlich eines minimierten Flächenbedarfs optimiertes Verpackungsverfahren sowie eine Verpackungsvorrichtung anzugeben zum Verpacken von aus Pipettenspitzen oder medizinischen Reaktionsgefäßen ausgebildeten Kunststoffspritzgussteilen. Verfahren und Vorrichtung sollen dabei bevorzugt gewährleisten, dass nachvollziehbar ist, aus welcher Kavität bzw. aus welchen Kavitäten die Kunststoffspritzgussteile einer Endverpackungseinheit entstanden und bei denen die Anzahl A der maximal einen Endverpackungseinheit zu beladenen Kunststoffspritzgussteile unabhängig wählbar ist von der fixen Anzahl K Kavitäten eines Spritzgusswerkzeugs. Darüber hinaus soll der Aufbau der Vorrichtung möglichst einfach und robust sein und das Beschädigungsrisiko der Kunststoffspritzgussteile soll minimiert werden.

Diese Aufgabe wird hinsichtlich des Verpackungsverfahrens mit den Merkmalen des Anspruchs 1, hinsichtlich der Verpackungsvorrichtung mit den Merkmalen des Anspruchs 7 und hinsichtlich der Spritzgussanlage mit den Merkmalen des Anspruchs 14 gelöst.

Vorteilhafte Weiterbildungen der Erfindung sind in den Unteransprüchen angegeben.

Zur Vermeidung von Wiederholungen sollen verfahrensgemäß offenbarte Merkmale als vorrichtungsgemäß offenbart gelten und beanspruchbar sein. Ebenso sollen vorrichtungsgemäß offenbarte Merkmale als verfahrensgemäß offenbart gelten und beanspruchbar sein.

Erfindungsgemäß ist vorgesehen, dass die Untergruppen mittelbar oder unmittelbar auf einem, wie später noch erläutert werden wird, vorzugsweise als Zwischenspeicher ausgebildeten oder mindestens eine Endverpackungseinheit tragenden Tisch gebildet werden, wobei der Tisch aus einer Beladeposition in eine Entnahmeposition verstellbar ist, aus welcher im Falle der Ausbildung des Tisches als Zwischenspeicher die Untergruppen entnommen und auf die Endverpackungseinheiten verteilt werden oder im Falle der Ausbildung des Tisches als Träger für die Endverpackungseinheiten die mindestens eine Endverpackungseinheit von dem Tisch entnommen wird, wobei die Verstellbewegung zwischen der Beladeposition und der Entnahmeposition entlang einer Vertikalachse erfolgt. Dies bedeutet, dass also die Beladeposition und die Entnahmeposition entlang der Vertikalachse beabstandet sind, wodurch vermieden werden kann, dass der Tisch zwischen einer Beladeposition und einer Entnahmeposition ausschließlich in der Horizontalen verstellt werden muss, wodurch Standfläche für eine entsprechende Vorrichtung eingespart werden kann, da die Vorrichtung im Hinblick auf die Verstellbewegung des Tisches vertikal, d.h. in einer Hoch- oder Tiefenrichtung erweitert werden kann. Grundsätzlich ist es sowohl möglich, dass die Beladeposition entlang der Vertikalachse unten und die Entnahmeposition entlang der Vertikalachse darüber angeordnet ist, wobei auch eine umgekehrte Anordnung realisierbar ist.

Ganz besonders bevorzugt ist es, wenn die Entnahmeposition und die Beladeposition zumindest näherungsweise exakt übereinander angeordnet sind, d.h. entlang der Vertikalen fluchtend. Erfindungsgemäß müssen die Tische zumindest abschnittsweise in einer Flucht liegen. Dies wird erfindungsgemäß, wie später noch erläutert werden wird, mit einer Wechseltischanordnung realisiert, die zwei oder mehr Tische (Ablagetische) umfasst. Durch die vertikale Verstellmöglichkeit der Tische kann also bei sämtlichen Vorteilen der als Zwischenspeicher oder Träger für Endverpackungseinheiten ausgebildeten Tische gleichzeitig der Flächenbedarf der gesamten Verpackungsvorrichtung minimiert werden, da in die Vertikale ausgewichen wird. Bevorzugt ist die Verstellung der Tisch entlang der Vertikalachse im Rahmen einer rotatorischen Bewegung, insbesondere um, wie später noch erläutert werden wird, erfindungsgemäß mehrere Tische gleichzeitig in einer gekoppelten Bewegung entlang der Vertikalachse verstellen zu können, derart, dass immer dann, wenn sich einer der Tische in der Entnahmeposition befindet, in welcher er entladen werden kann sich ein anderer der Tische in der Beladeposition befindet, in welcher er beladen werden kann, so dass das Beladen eines Tisches mit Kunststoffspritzgussteilen aus der Spritzgussvorrichtung (ggf. unter Zwischenlagerung in einem später noch zu erläuternden Zwischenpuffer) gleichzeitig mit der Entnahme von Spritzgussteilen aus einem anderen der Tische erfolgen kann.

Wie später noch erläutert werden wird, gibt es grundsätzlich zwei Alternativen im Aufbau der Verpackungsvorrichtung bzw. in der Ausführung des Verpackungsverfahrens. Gemäß einer ersten, bevorzugten Alternative sind die entlang der Vertikalachse verstellbaren Tische als Zwischenspeicher ausgebildet, der dann die anspruchsgemäße, insbesondere horizontale Ablageebene bildet, wobei die K Kunststoffspritzgussteile von ersten Ablagemitteln, die einen Greifer umfassen, in dem Zwischenspeicher (Tisch) gruppiert werden. Gemäß einer alternativen Ausführungsform wird bewusst auf einen solchen Zwischenspeicher verzichtet und die Gruppierung erfolgt (erst) in mindestens einer dann die anspruchsgemäße Ablageebene definierenden Endverpackungseinheit, bevorzugt gleichzeitig in mehreren, insbesondere in einer Horizontalebene nebeneinander angeordneten Endverpackungseinheiten, wobei die mindestens eine Endverpackungseinheit von einem Tisch der mehreren Tische getragen und in der Beladeposition des Tisches befüllt und in der Entnahmeposition des Tisches von diesem entladen (entnommen) wird.

Für den Fall, dass die Tische als Zwischenspeicher ausgebildet sind, kann aus diesem gleichzeitig eine einzige Endverpackungseinheit (und nacheinander mehrere Endverpackungseinheiten) oder alternativ gleichzeitig mehrere Endverpackungseinheiten beladen werden. Jedenfalls ist die Anzahl der in einer Endverpackungseinheit maximal aufnehmbaren Kunststoffspritzgussteile gleich wie oder bevorzugt geringer als die im Zwischenspeicher (Tisch) maximal aufnehmbaren Teile, wobei die Anzahl A der in einer Endverpackungseinheit maximal aufnehmbaren Kunststoffspritzgussteile bevorzugt einem ganzzahligen Teiler der im Zwischenspeicher maximal vorgesehenen Teilezahl entspricht. Die Endverpackungseinheiten werden egal ob direkt oder indirekt über den Zwischenspeicher bevorzugt lückenlos beladen.

Wesentlich ist es, dass es sich bei den im Rahmen des Verfahrens bzw. der Vorrichtung zur Anwendung kommenden Verpackungseinheiten, die entweder aus den jeweils als Zwischenspeicher ausgebildeten Tischen beladen werden oder die von dem mindestens einen Tisch getragen und in denen unmittelbar Untergruppen gebildet werden, um Endverpackungseinheiten handelt, die nach der vollständigen Befüllung zu Endkunden ausgeliefert werden, wobei es sich beim Auslieferungsschritt an den Endkunden bzw. die Übergabe an eine Spedition oder dergleichen Transporteinheit um einen weiterbildungsgemäßen Verfahrensschritt handelt, der 60, 84, 96, 105 oder 120 Kunststoffspritzgussteile beinhalten. Bevorzugt werden die Endverpackungseinheiten zu den Endkunden in Umverpackungen geliefert, wobei entweder die Endverpackungen einzeln, d.h. jeweils mit einer Umverpackung versehen werden oder alternativ mehrere Endverpackungen gruppiert und gemeinsam mit einer Umverpackung, beispielsweise einem Umkarton oder einer Folienverpackung versehen werden. Bei den zum Einsatz kommenden Endverpackungseinheiten handelt es sich ausdrücklich nicht um Werkstückträger zur Zwischenlagerung, aus denen heraus dann in einem zeitlich später gelagerten Schritt, insbesondere nach einer Lagerzeit in einem Zwischenlager, Endverpackungseinheiten verpackt werden. Auch handelt es sich nicht um innerhalb der Verpackungsvorrichtung rotierende bzw. in dieser verbleibende Zwischenspeicher, wie die in der EP 2 323 930 B1 beschriebenen Zwischenspeicher, aus welchen dann erst die Endverpackungseinheiten befüllt werden.

Wesentlich ist also, dass die Endverpackungseinheiten nicht dauerhaft in der Verpackungsvorrichtung verbleiben und darin beispielsweise rotieren, sondern dem Verpackungsprozess mittels geeigneter Zuführmittel zugeführt werden und nach dem Beladen aus der Verpackungsvorrichtung mittels geeigneter Ausschleusmittel ausgeschleust werden.

Bevorzugt besteht jede Endverpackungseinheit aus einem mehrere Öffnungen zur jeweiligen Aufnahme eines Kunststoffspritzgussteils aufweisenden Träger, beispielsweise aus Kunststoff oder Metall. Ganz besonders bevorzugt handelt es sich um metallische Träger, beispielsweise aus Aluminium, die hochpräzise gefertigt sind und die nach deren bestimmungsgemäßer Verwendung beim Endkunden, in einem Analysegerät, leer zum Verpackungsprozess zurückgelangen und wieder befüllt werden können. Zusätzlich oder alternativ zu den jeweils A Öffnungen bzw. Vertiefungen können die Endverpackungseinheiten A Aufsteckelemente zum Aufstecken der Kunststoffspritzgussteile aufweisen.

Alternativ handelt es sich bei den Endverpackungseinheiten um Wegwerfträger (Einwegträger), z.B. aus Kunststoff. Unabhängig von der Materialwahl des Trägers sind diese besonders bevorzugt ausgebildet und bestimmt, um in einem Analysegerät, insbesondere in einem Blutanalysegerät eingesetzt zu werden. Bevorzugt sind die Träger (Endverpackungseinheiten) so auf bekannte Analysegeräte abgestimmt, dass diese in diese eingesetzt werden können, so dass die Analysegeräte, bevorzugt automatisch, Pipettenspitzen oder medizinische Reaktionsgefäße aus dem Träger entnehmen können.

Wie eingangs bereits erläutert ist es erfindungswesentlich, dass im Rahmen des Verpackungsverfahrens bzw. der Verpackungsvorrichtung mehrere Tische vorgesehen sind, wobei es ganz besonders bevorzugt ist, wenn ausschließlich zwei Tische einer gemeinsamen Spritzgussvorrichtung zugeordnet vorgesehen sind, die zwischen Entnahmeposition und Beladeposition entlang der Vertikalachse verstellbar sind. Grundsätzlich ist es jedoch denkbar auch mehr als zwei Tische vorzusehen, die gleichzeitig entlang der Vertikalachse verstellbar sind. Erfindungsgemäß ist nun vorgesehen, dass die mehreren Tische, also entweder die ausschließlich zwei Tische oder die mehr als zwei Tische in einer gekoppelten Bewegung entlang der Vertikalachse verstellbar sind bzw. verstellt werden, wobei es sich noch weiter bevorzugt um eine rotatorische Bewegung handelt, um die mehreren Tische aneinander vorbei zwischen der Entnahme und der Beladeposition verstellen zu können. Die rotatorische Bewegung kann dabei auf unterschiedliche Weise realisiert werden. Denkbar ist eine rotatorische Bewegung in einer umlaufenden, insbesondere kreisförmigen Bahn. Alternativ ist eine pendelnde Bewegung der Tische zwischen Entnahme und Beladeposition realisierbar, so dass keine umlaufende Bahn, sondern nur eine Teilumlaufbahn, insbesondere eine Teilkreisbahn, ganz besonders bevorzugt eine Halbkreisbahn durchlaufen wird. Bevorzugt werden die Bewegungen der Tische relativ zu Trägermitteln für die Tische und eine Rotation der Trägermittel um eine, vorzugsweise horizontale Rotationsachse synchronisiert, insbesondere derart, dass die Tische immer den gleichen Winkel zur Vertikalen aufweisen, vorzugsweise während der gesamten Verstellbewegung horizontal ausgerichtet sind und noch weiter bevorzugt parallel zueinander. Anders ausgedrückt verkippen die von den, insbesondere jedoch nicht zwingend flächigen Tischen bereitgestellten Ablageebenen während der Verstellbewegung nicht um eine horizontale Achse aus der Horizontalen, wobei es im Fall des Vorsehens von die mehreren Tischen haltenden, insbesondere gemeinsamen Trägermitteln bevorzugt ist, wenn die Tische sich während der Verstellbewegung relativ zu den Trägermitteln verdrehen bzw. umgekehrt, wobei sich die Trägermittel wiederum um eine Rotationsachse verdreht werden, die bevorzugt parallel zu den Relativverschwenkachsen der Zwischenpuffer zu den Trägermitteln verläuft.

Bei einer erfindungsgemäßen Ausführungsform des Verpackungsverfahrens bzw. der Vorrichtung werden die zwei oder mehr als zwei Tische derart verstellt bzw. sind derart verstellbar angeordnet, dass sich immer einer der Tische in der Beladeposition befindet, wenn sich ein anderer der Tische bzw. im Falle des Vorsehens von ausschließlich zwei Tischen der andere Tisch, in der Entnahmeposition befindet, um somit gleichzeitig eine Beladung des einen Tisches vornehmen zu können während der andere Tisch (d.h. im Fall der Ausbildung der Tische als Zwischenpuffer die Untergruppen und im Fall der Ausbildung der Tische als Träger die mindestens eine, bevorzugt die mehreren Endverpackungseinheiten) entladen wird.

Idealerweise wird das nach dem Konzept der Erfindung ausgebildete Verfahren angewendet, wenn die Anzahl der pro Endverpackungseinheit vorzusehenden A Kunststoffspritzgussteile nicht der Anzahl der Kavitäten oder nicht einem ganzzahligen Vielfachen der Anzahl der Kavitäten entspricht.

Im Hinblick auf die Anzahl der gleichzeitig zu befüllenden Endverpackungseinheiten gibt es unterschiedliche Möglichkeiten. So ist es grundsätzlich möglich, dass gleichzeitig nur eine einzige Endverpackungseinheit befüllt wird, oder dass gleichzeitig mehrere Endverpackungseinheiten befüllt werden. Das Befüllen erfolgt insbesondere indem entweder unmittelbar in der mindestens einen von dem dann als Träger ausgebildeten Tisch getragenen Endverpackunsgeinheit Untergruppen gebildet werden oder indem alternativ die Untergruppen aus dem als Zwischenspeicher ausgebildeten Tisch in die Endverpackungseinheit überführt werden, bis die mindestens eine Endverpackungseinheit A Kunststoffspritzgussteile enthält, wobei für den Fall, dass ein Zwischenspeicher in Form des vertikal verstellbaren Tisches vorgesehen wird bevorzugt die Anzahl A der Kunststoffspritzgussteile maximal der Gesamtanzahl von in dem Zwischenspeicher aufgenommenen Kunststoffspritzgussteilen entspricht. Bevorzugt ist es jedoch, wenn die Anzahl A der maximal in eine Endverpackungseinheit aufzunehmenden Kunststoffspritzgussteile geringer ist als Anzahl der maximal in dem Zwischenspeicher aufnehmbaren Kunststoffspritzgussteile, um aus einem Zwischenspeicher (gleichzeitig oder nacheinander) mehrere Endverpackungseinheiten auffüllen zu können, und zwar entweder einzeln nacheinander oder in Gruppen nacheinander oder alternativ alle gleichzeitig. Ganz besonders bevorzugt ist es, wenn die Anzahl A der maximal in einer Endverpackungseinheit vorsehbaren Kunststoffspritzgussteile einem ganzzahligen Teiler der maximal in dem Zwischenspeicher aufnehmbaren Anzahl von Kunststoffspritzgussteilen entspricht.

Wie bereits mehrfach angedeutet, gibt es zwei grundsätzlich unterschiedliche Ausgestaltungsvarianten des Verfahrens und der Vorrichtung, eine erste mit jeweils als Zwischenspeicher ausgebildeten Tischen zur Gruppierung und eine zweite ausdrücklich ohne einen solchen Zwischenspeicher, bei der, bevorzugt nach einer Entnahme aus einem fakultativen Zwischenpuffer, die Gruppierung in der mindestens einen von den dann jeweils als Träger ausgebildeten Tischen getragenen Endverpackungseinheit erfolgt.

Bei der ersten Alternative wird also die Ablageebene von dem als Zwischenspeicher ausgebildeten Tisch (der mehreren Tische) gebildet, aus dem die einzige (und bevorzugt nacheinander mehrere) oder die mehreren Endverpackungseinheit(en) beladen werden, wobei als Zwischenspeicher, d.h. Tisch ein bevorzugt plattenförmiger Zwischenspeicher mit einer Vielzahl von in einer Ablageebene nebeneinander angeordneten Ablagepositionen eingesetzt wird und wobei solange K Kunststoffspritzgussteile aus den K Kavitäten entnommen (und nach einer vorherigen Ablage im Zwischenpuffer) gleichmäßig auf die U Untergruppen in den Zwischenspeicher verteilt werden, bis jede Untergruppe L Kunststoffspritzgussteile aufweist, wobei die Anzahl L der Kunststoffspritzgussteile einer Untergruppe der Anzahl A von maximal in einer Endverpackungseinheit ladbaren Kunststoffspritzgussteilen oder einem ganzzahligen Teiler von A entspricht. Dieser Ausführungsform liegt der Gedanke zugrunde, die aus den K Kavitäten entnommenen, und ggf. zuvor im fakultativen Zwischenpuffer kurzzeitig zwischengepufferten, K Kunststoffspritzgussteile geordnet in Untergruppen in den Zwischenspeicher (vertikal verstellbarer Tisch) abzuladen, d.h. gleichmäßig in diesem auf die U Untergruppen zu verteilen. Dabei ist es möglich, dass bei jedem Ablagezyklus immer nur ein Kunststoffspritzgussteil pro Untergruppe abgelegt wird, oder aber mehrere Kunststoffspritzgussteile pro Untergruppe, und zwar jeweils in jeder Untergruppe gleichviele Spritzgussteile. In jedem Fall sind mehrere Ablagezyklen zum Füllen der Untergruppen notwendig, wobei der vertikal verstellbare Zwischenspeicher bevorzugt deutlich mehr Kunststoffspritzgussteile fasst als eine Endverpackungseinheit. Das Entnehmen von K Kunst-stoffspritzgussteilen aus dem Zwischenspeicher und das Ablegen in den Untergruppen mittels der ersten Ablagemittel erfolgt mehrfach und wird solange wiederholt, bis in jeder Untergruppe eine Anzahl L Kunststoffspritzgussteile vorhanden ist, wobei die Anzahl L der Kunststoffspritzgussteile einer Untergruppe der Anzahl A von den einer der Endverpackungseinheit zu ladenden (maximal beladbaren) Kunststoffspritzgussteilen oder einem ganzzahligen Teiler von A entspricht. Mit der vorgeschlagenen Variante ist es möglich, unabhängig von der fixen Anzahl K Kavitäten des Spritzgusswerkzeuges Endverpackungseinheiten mit einer beliebigen Anzahl A von als Pipettenspitzen oder medizinische Reaktionsgefäße ausgebildeten Kunststoffspritzgussteilen ohne überbleibenden Überschuss zu befüllen. Es können in einer Spritzgussanlage mit 32 Kavitäten beispielsweise Verpackungseinheiten mit 105 Kunststoffspritzgussteilen bestückt werden, ohne dass die Notwendigkeit besteht, gleichzeitig 32 Verpackungseinheiten zu befüllen. Dies kann beispielsweise dadurch realisiert werden, dass in 105 Ablagezyklen insgesamt 32 Untergruppen mit jeweils 105 Kunststoffspritzgussteilen auf dem vertikal verstellbaren Zwischenspeicher gebildet werden, und dass nach dem Fertigstellen der 32 Untergruppen beispielsweise eine, oder bevorzugt mehr, insbesondere 2, 4, 8, 16 oder 32 Verpackungseinheiten nacheinander, in Gruppen oder alle gleichzeitig jeweils mit 105 Kunststoffspritzgussteilen bestückt werden. Ebenso ist es möglich, 32 Untergruppen mit jeweils 21 Kunststoffspritzgussteilen zu bilden, wobei dann immer fünf Untergruppen zu einer Endverpackungseinheit zusammengefasst werden können. Die Herstellungsnachvollziehbarkeit ist insofern gegeben, als dass zu jeder Endverpackungseinheit eine definierte Aussage darüber getroffen werden kann, aus welchen fünf Kavitäten genau die Kunststoffspritzgussteile entstammen. Analog ist es möglich, 32 Untergruppen mit jeweils sieben Kunststoffspritzgussteilen zu bilden und jeweils 15 Untergruppen zu einer Endverpackungseinheit zusammenzufassen. Ebenso können 32 Untergruppen mit jeweils drei Kunststoffspritzgussteilen gebildet und jeweils 35 Untergruppen pro Endverpackungseinheit zusammengefasst werden. Bevorzugt entspricht die Anzahl V der gleichzeitig zu beladenden Endverpackungseinheiten nicht der Anzahl der Kavitäten K. Ganz besonders bevorzugt entspricht der Anzahl V der zu beladenden Endverpackungseinheiten einem ganzzahligen Teiler von A. Es ist also auch möglich, gleichzeitig immer nur eine Endverpackungseinheit aus dem Zwischenspeicher zu bestücken oder mehrere Endverpackungseinheiten gleichzeitig oder nacheinander. Es sind mehrere verstellbare, z.B. rotierbare oder translatorisch verstellbare Zwischenspeicher, z.B. in der Form von Werkstückträgern vorgesehen.

Bevorzugt erfolgt das Umladen der Untergruppen in die Endverpackungseinheiten, d.h. das Befüllen der mindestens einen Endverpackungseinheit aus dem jeweiligen als Zwischenspeicher ausgebildeten, vertikal verstellbaren Tisch der mehreren Tische mit mindestens einem von den ersten Ablagemitteln und ggf. im Falle des Vorsehens eines Zwischenpuffers vorgesehenen zweiten Ablagemitteln separaten Greifer.

Bei der zweiten alternativen Ausführungsform wird auf den bei der ersten Alternative zur Anwendung kommenden Zwischenspeicher zur Bildung der Untergruppen verzichtet und stattdessen werden die Untergruppen mittels der ersten Ablagemittel unmittelbar gleichzeitig in einer einzigen von einem vertikal verstellbaren Tisch der mehreren Tische getragenen Endverpackungseinheit oder alternativ gleichzeitig und bevorzugt in mehreren von einem Tisch der mehreren Tische getragenen und in einer gemeinsamen Ebene angeordneten Endverpackungseinheiten gebildet. Anders ausgedrückt wird die einzige Endverpackungseinheit oder werden die mehreren Endverpackungseinheiten schrittweise aufgefüllt, in dem mehrfach hintereinander gleichzeitig K, fakultativ zuvor aus dem Zwischenpuffer oder unmittelbar der Spritzgussvorrichtung entnommene Kunststoffspritzgussteile auf die Untergruppen der einzigen Endverpackungseinheit oder in den mehreren Endverpackungseinheiten verteilt werden. Dabei werden solange jedes Mal K Kunststoffspritzgussteile verteilt, bis jede Endverpackungseinheit mit A Kunststoffspritzgussteilen, d.h. der maximal möglichen in diese einsetzbaren Teilezahl befüllt sind. Grundsätzlich ist es möglich, dass die Anzahl der gleichzeitig mittels der ersten Ablagemittel zu befüllenden Endverpackungseinheiten der Anzahl K Kavitäten entspricht. In diesem Fall werden die Endverpackungseinheiten mit Kavitätenreihen befüllt, d.h. jede Endverpackungseinheit erhält eine einzige Untergruppe bevorzugt mit Kunststoffspritzgussteilen aus einer einzigen Kavität. Es ist jedoch auch im Rahmen der zweiten Alternative möglich und bevorzugt, wenn weniger Endverpackungseinheiten gleichzeitig befüllt werden als Kavitäten vorhanden sind. In diesem Fall erhält jede Endverpackungseinheit bevorzugt gleichviele Untergruppen, bevorzugt jeweils mindestens zwei Untergruppen, wobei die mindestens zwei Untergruppen jeder Endverpackungseinheit gleichzeitig bei einem Ablageschritt um jeweils ein, vorzugsweise ausschließlich ein Kunststoffspritzgussteil erweitert werden. Im Extremfall ist es denkbar, gleichzeitig nur eine einzige Endverpackungseinheit zu befüllen - diese erhält dann bei jedem Ablageschritt sämtliche Kunststoffspritzgussteile sämtlicher Kavitäten. Bevorzugt ist es jedoch, wenn gleichzeitig mindestens zwei Endverpackungseinheiten befüllt werden, d.h. wenn die Gruppen in mindestens zwei Endverpackungseinheiten gleichzeitig gebildet bzw. erweitert werden, bis die Endverpackungseinheiten vollständig jeweils mit der maximal möglichen Anzahl an A Kunststoffspritzgussteilen befüllt sind.

In den Endverpackungseinheiten werden die Kunststoffspritzgussteile jeweils in einer, bevorzugt horizontalen Ablageebene nebeneinander abgelegt, wobei es besonders bevorzugt ist, wenn im Falle des gleichzeitigen Befüllens mehrere Endverpackungseinheiten, diese in einer gemeinsamen Ebene angeordnet sind bzw. eine gemeinsame Ablageebene bilden.

Besonders zweckmäßig ist es, wenn, unabhängig von der Realisierung der ersten oder zweiten Alternative die Untergruppen in der Ablageebene (Zwischenspeicher oder Endverpackungseinheiten), die Kunststoffspritzgussteile einer Untergruppe in einer festen Relativposition zueinander angeordnet sind. Ganz besonders bevorzugt ist es, wenn die Untergruppen in der Ablageebene erkennbar sind, was dadurch realisiert werden kann, dass die Untergruppen mit Abstand zueinander angeordnet werden, was jedoch nicht zwingend ist. Wesentlich ist lediglich, dass eine Steuereinheit (Steuermittel) die Position der zu einer bestimmten Untergruppe gehörenden Kunststoffspritzgussteile erkennt. Dabei können grundsätzlich mehrere Kunststoffspritzgussteile unterschiedlicher Untergruppen unmittelbar nebeneinander angeordnet werden.

Besonders zweckmäßig ist es, wenn die K Kunststoffspritzgussteile im Falle des Vorsehens eines als vertikal verstellbarer Tisch ausgebildeten Zwischenspeichers in diesem so abgelegt werden, dass die Anzahl U der Untergruppen der Anzahl V der Endverpackungseinheiten oder einem ganzzahligen Vielfachen von V nicht entspricht oder alternativ entspricht.

Besonders zweckmäßig ist es, wenn im Falle der Ausbildung des mindestens einen Tisches als Zwischenspeicher dieser als ein plattenartiger Zwischenspeicher ausgebildet ist, der eine der maximalen Ablagepositionen entsprechende Anzahl von Vertiefungen oder Aufsteckelementen aufweist. Grundsätzlich ist es möglich, die aus einer Spritzgussform entnommenen K Spritzgussteile ohne Zwischenpufferung entweder in dem als Zwischenspeicher ausgebildeten Tisch oder unmittelbar in den von dem Tisch getragenen Endverpackungseinheiten zu gruppieren, wobei hierzu erste Ablagemittel genutzt werden, die einen Greifer, beispielsweise einen mechanischen Greifer oder einen Vakuumgreifer für die K Kunststoffspritzgussteile umfassen. Grundsätzlich ist es möglich, dass auch die unmittelbare Entnahme aus den Kavitäten mittels der ersten Ablagemittel erfolgt, wobei es bevorzugt ist, wenn zusätzlich hierfür vorgesehene Entnahmemittel vorgesehen sind, von denen die K Kunststoffspritzgussteile bevorzugt unmittelbar von den ersten Ablagemitteln übernommen werden.

Alternativ ist es zur weiteren Beschleunigung des Verfahrens möglich,die aus den K Kavitäten gleichzeitig entnommenen K Kunststoffspritzgussteile vor dem Ablegen in einem (fakultativen, d.h. nicht zwingend jedoch bevorzugt vorgesehenen) Zwischenspeicher oder in den Endverpackungen in einem Zwischenpuffer abzulegen und zwar mit zweiten Ablagemitteln, die von den ersten Ablagemitteln, mit denen die K Kunststoffspritzgussteile in den Zwischenspeicher oder der mindestens einen Endverpackung zu Untergruppen gruppiert werden separat, d.h. zusätzlich vorgesehen ist. Anders ausgedrückt wird also mindestens eine zusätzliche, insbesondere horizontale, Ablageebene in Form eines Zwischenpuffers vorgesehen, in welchem die K Kunststoffspritzgussteile, vorzugsweise ausschließlich K Kunststoffspritzgussteile vor dem Zuordnen zu Untergruppen in dem als Zwischenspeicher oder Träger mindestens einer Endverpackung, vorzugsweise in mehreren Endverpackungen, ausgebildeten, vertikal verstellbaren, zwischengepuffert, d.h. kurzzeitig abgelegt werden. Überraschend resultiert bereits aus dieser Maßnahme ein Geschwindigkeitsvorteil, d.h. die Zykluszeit kann gegenüber bekannten Verfahren und Vorrichtungen ohne einen solchen Zwischenpuffer weiter reduziert werden. Dies liegt in erster Linie darin, dass ggf. notwendige Rasterhübe auf mehrere Ablagemittel bzw. Greifer verteilt werden können. Hierdurch können die zweiten Ablagemittel eine deutlich geringere Funktionalität aufweisen und können daher mit geringerer Masse realisiert werden, was im Ergebnis dann überraschend trotz eines zusätzlichen Zwischenablageschrittes im Zwischenpuffer den gewünschten Geschwindigkeitsvorteil mit sich bringt. Die zweiten Ablagemittel, mit denen die K Kunststoffspritzgussteile in dem Zwischenpuffer abgelegt werden können im einfachsten Fall von Entnahmemitteln gebildet werden, mit denen die K Kunststoffspritzgussteile aus den K Kavitäten entnommen werden. Bevorzugt ist es jedoch zur weiteren Geschwindigkeitsoptimierung, wenn es sich bei den zweiten Ablagemitteln um von den Entnahmemitteln separate, d.h. zusätzlich vorgesehene Handhabungsmittel handelt.

Grundsätzlich ist es möglich, als zweite Ablagemittel zur Ablage eines Schusses von K Kunststoffspritzgussteilen in dem in der Zwischenpuffer-Beladeposition befindlichen Zwischenpuffer ein Schlauchpaket vorzusehen, in welches die K Kunststoffspritzgussteile nach oder während der Entnahme aus den K Kavitäten überführt und mit Druckluft innerhalb dieser Schläuche zu dem Zwischenpuffer gefördert werden. Zur Minimierung einer Beschädigungsgefahr der Kunststoffspritzgussteile und zur Optimierung des Bauraums ist es jedoch vorteilhaft, wenn die zweiten Ablagemittel einen Greifer umfassen, wobei allgemein unter einem Greifer im Rahmen der vorliegenden Anmeldung Vakuumgreifer und/oder mechanische Greifer verstanden werden, d.h. eine Handhabungseinrichtung, die die K Kunststoffspritzgussteile an einer Empfangsposition übernimmt, und sich dann zu einer Ablageposition bewegt, insbesondere verschwenkt oder translatorisch verfährt und an der Ablageposition ablädt.

Wie erläutert kann in der Zwischenpuffer-Entnahmeposition der Zwischenpuffer entladen werden, um die K Kunststoffspritzgussteile auf die U Untergruppen zu verteilen, wobei die Gruppierung zu den Untergruppen bzw. die Ablage in einer entsprechenden Ablageebene mit ersten Ablagemitteln erfolgt, wobei es besonders bevorzugt ist, wenn mit diesen ersten Ablagemitteln die K Kunststoffspritzgussteile an der Entnahmeposition auch aus dem Zwischenpuffer entnommen werden. Denkbar ist alternativ auch die Entnahme über einen Übergabegreifer, der die K Kunststoffspritzgussteile an die ersten Ablagemittel übergibt.

Grundsätzlich ist es denkbar, dass sich in dem Zwischenpuffer gleichzeitig mehr als ein Schuss von K Kunststoffspritzgussteilen befindet.

Der mindestens eine Zwischenpuffer ist jedoch bevorzugt so ausgelegt, dass dieser gleichzeitig nicht mehr als einen Schuss von K Kunststoffspritzgussteilen aufnehmen kann und/oder das Verfahren ist so ausgebildet, dass sich gleichzeitig in dem Zwischenpuffer immer nur ein Schuss von K Kavitäten befindet.

Weiterbildungsgemäß ist vorgesehen, dass aus dem Zwischenpuffer vor dem erneuten Befüllen mit K Kunststoffspritzgussteilen K Kunststoffspritzgussteile entnommen und (entweder im Zwischenspeicher oder alternativ unmittelbar in den Endverpackungseinheiten oder der einzigen Endverpackungseinheit) auf die U Untergruppen verteilt werden.

In Weiterbildung der Erfindung ist nun vorgesehen, dass nicht nur die Tische zwischen einer Belade- und einer Entnahmeposition verstellbar sind, sondern auch der fakultativ vorgesehene Zwischenpuffer. Die Belade- und Entnahmeposition des Zwischenpuffers können dabei entweder, was bevorzugt ist, in einer Horizontalrichtung beabstandet sein und/oder in einer Vertikalrichtung. Grundsätzlich ist es möglich, den Zwischenpuffer entlang einer horizontalen oder einer vertikalen Achse verstellbar anzuordnen oder entlang einer schräg verlaufenden Achse, wobei die Bewegung bevorzugt translatorisch ausgeführt wird, wobei alternativ auch eine Schwenk- bzw. Rotationsbewegung zwischen Belade- und Entnahmeposition des Zwischenpuffers realisierbar ist.

In Weiterbildung der Erfindung ist mit Vorteil vorgesehen, dass die Kunststoffspritzgussteile einer bestimmten Kavität oder aus bestimmten Kavitäten immer in einer bestimmten Untergruppe oder in bestimmten Untergruppen abgelegt wird/werden.

In Weiterbildung der Erfindung ist mit Vorteil vorgesehen, dass die Endverpackungseinheiten jeweils mit einer einzigen Untergruppe oder jeweils mit mehreren Untergruppen beladen werden, wobei die Anzahl der Untergruppen vorzugsweise geringer ist als die Anzahl der Untergruppen auf dem Zwischenspeicher.

In Weiterbildung der Erfindung ist mit Vorteil vorgesehen, dass die Anzahl A einem ganzzahligen Vielfachen der Kavitätenzahl oder nicht einem ganzzahligem Vielfachen der Kavitätenzahl entspricht.

In Weiterbildung der Erfindung ist mit Vorteil vorgesehen, dass die K Spritzgussteile vor dem Verteilen auf die U Untergruppen in der Ablageebene auf dem in der Beladeposition befindlichen Tisch in einem Zwischenpuffer mit von den ersten Ablagemitteln separaten zweiten Ablagemittel, insbesondere mit einem Schlauchpaket oder mit einem Greifer, abgelegt werden und dass aus dem Zwischenpuffer K Kunststoffspritzgussteile, insbesondere mittels der ersten Ablagemittel, entnommen und auf dem in der Beladeposition befindlichen Tisch in die U Untergruppen verteilt werden.

In Weiterbildung der Erfindung ist mit Vorteil vorgesehen, dass auf dem Zwischenpuffer gleichzeitig ausschließlich ein Schuss von K Kunststoffspritzgussteilen aufgenommen wird und/oder aufnehmbar ist.

In Weiterbildung der Erfindung ist mit Vorteil vorgesehen, dass der Zwischenpuffer, insbesondere translatorisch entlang einer Horizontalachse oder, beispielsweise in einer Schwenkbewegung, entlang einer Vertikalachse zwischen einer Zwischenpuffer-Beladeposition (ZB) und einer Zwischenpuffer-Entnahmeposition (ZE) verstellbar ist.

Die Erfindung führt auch auf eine Verpackungsvorrichtung, die bevorzugt zur Durchführung des erfindungsgemäßen Verfahrens bestimmt und ausgebildet ist. Kern der Verpackungsvorrichtung ist eine Steuereinheit (Steuermittel), die die Handhabungsmittel, d.h. Entnahmemittel und/oder erste Ablagemittel und/oder fakultativ vorgesehene zweite Ablagemittel und/oder ggf. vorgesehene Übergabegreifer und/oder einen vertikalen Verstellmechanismus für die bevorzugt als Zwischenspeicher oder Endverpackungsträger ausgebildeten Tische so ansteuert, dass das Verfahren wie zuvor beschrieben ausgeführt werden kann. Die Steuermittel steuern den Tischen zugeordnete Verstellmittel so an, dass diese nach dem Beladen in der Beladeposition entlang der Vertikalachse verstellt werden in Richtung einer entlang der Vertikalachse beabstandeten Entnahmeposition, wobei wie später noch im Detail erläutert werden wird, erfindungsgemäß mehr als ein Tisch vorgesehen ist und die Verstellmittel die mehreren Tische in einer gekoppelten, d.h. gemeinsamen bzw. gleichzeitigen Bewegung zwischen Belade- und Entnahmeposition entlang der Vertikalachse verstellend angeordnet sind. Bevorzugt ist dabei die Bewegung der Tische relativ zu diesen tragende Trägermittel synchronisiert, so dass die Tische ihre Winkellage (insbesondere 90°) relativ zur Vertikalachse nicht verändern. Die Synchronisierung kann dabei rein mechanisch, kombiniert mechanisch und elektronisch oder ausschließlich elektronisch erfolgen, letzteres beispielsweise indem jedem Tisch ein eigener, insbesondere servomotorischer Antrieb zugeordnet ist, deren Ansteuerung synchronisiert ist mit der Ansteuerung eines weiteren Antriebs, insbesondere eines servomotorischen Antriebs zum Antreiben von die mehreren Tische, insbesondere rotatorisch haltenden Trägermitteln.

Erfindungsgemäß ist vorgesehen, dass nicht nur ein einziger Tisch vorgesehen ist, der, beispielsweise auf einer Kreisbahn (oder einer anderen bogenförmigen Bahn) entlang der Vertikalachse zwischen der Entnahmeposition und der Beladeposition verstellbar ist, sondern mehr als ein Tisch, wobei die Tische bevorzugt als Ablagetische oder Tragstruktur für die Endverpackungseinheit, z.B. plattenartig bzw. mit einer Flächenerstreckung ausgebildet sind, wobei weiter, wie später noch erläutert werden wird, besonders bevorzugt vorgesehen ist, dass die Tische ihre Winkellage zur Vertikalen bei der gesamten Verstellbewegung im Wesentlichen nicht verändern und ganz besonders bevorzugt horizontal ausgerichtet bleiben sowie parallel zueinander. Um dies zu gewährleisten, muss die Bewegung der Tische relativ zu Trägermitteln synchronisiert zur Rotation der Tische um eine Rotationsachse der Trägermittel oder anders ausgedrückt zu einem Antrieb der Trägermittel erfolgen, wobei hier grundsätzlich eine elektronische Synchronisierung über eine entsprechende Ansteuerung separater servomotorischer Antriebe möglich ist und/oder eine mechanische Synchronisierung, wobei die Relativverdrehbewegung der Tische zu den Trägermitteln der Tische bevorzugt gekoppelt wird mit einer rotatorischen Bewegung der Trägermittel um eine Rotationsachse. Besonders bevorzugt sind die Tische dabei in der Form eines sogenannten Wechseltisches (Wechseltischanordnung) angeordnet, bei welchem die die Tische tragenden Trägermittel um eine, insbesondere horizontale Drehachse verdreht werden, beispielsweise mittels eines rotatorischen Antriebs und wobei diese Rotationsbewegung, insbesondere der rotatorische Antrieb mechanisch oder elektronisch gekoppelt ist mit der Rotationsbewegung der Tische. Dabei ist es grundsätzlich möglich, dass die Relativbewegung der Tische zu den Trägermitteln von dem Antrieb der Trägermittel aktuiert wird, wobei dann eine mechanische Kopplung, beispielsweise über einen Riemenantrieb, einen Königswellenantrieb oder eine Zahnradanordnung erfolgt. Alternativ ist es denkbar separate Antriebe für die Tische und die Trägermittel vorzusehen und diese beispielsweise elektronisch oder aber auch mechanisch zu koppeln.

Im Folgenden werden bevorzugte Ausführungsformen von Verstellmitteln beschrieben, die allesamt sicherstellen, dass sich die Ausrichtung der Tische, insbesondere aus einer Horizontallage heraus, während der Verstellbewegung und in der End- sowie Entnahmeposition nicht ändert.

Im einfachsten Fall ist diese Bewegung nicht mechanisch oder elektronisch synchronisiert, sondern nur über die Wirkung der Schwerkraft. Dies kann beispielsweise dadurch realisiert werden, dass Trägermittel vorgesehen sind, beispielsweise in Form eines langgestreckten Arms, welcher rotatorisch, insbesondere mittels eines Elektromotors um eine Rotationsachse verstellbar ist. Sind nun die Tische voneinander beabstandet gelenkig mit dem Trägerarm, insbesondere in der Art eines Pendels, verbunden und hinsichtlich ihres Schwerpunktes ausnivelliert bleiben die Tische bei einer Rotationsbewegung der Trägermittel um die Rotationsachse und bei einer minimierten Reibung entsprechender Lager der gelenkigen Verbindungen der Tische zu dem Trägerarm automatisch horizontal ausgerichtet.

Bevorzugt ist es jedoch auch, wenn, um besonders schnelle Zykluszeiten zu erreichen, mechanische und/oder elektronische Synchronisierung zur Kopplung dieser Bewegung vorgesehen sind.

Eine elektronische Synchronisierung kann beispielsweise dadurch realisiert werden, dass ein eigener, servomotorischer Antrieb für die Trägermittel vorgesehen ist, mit welchem die Trägermittel um eine, insbesondere horizontale Rotationsachse verdrehbar sind und zusätzlich jedem der Tische ein eigener, insbesondere servomotorischer Antrieb, wobei die Ansteuerung der Antriebe der Tische zum Relativverdrehen der Tische zu den Trägermitteln elektronisch mit der Drehbewegung der Trägermittel um die Rotationsachse gekoppelt sind, insbesondere derart, dass jedem Drehwinkel der Trägermittel um die Rotationsachse ein fester Drehwinkel der Tische um deren Relativrotationsachse bezüglich der Trägermittel zugeordnet ist.

Besonders zweckmäßig ist jedoch eine Ausführungsform, bei der den Tisch und den diese tragenden Trägermitteln ein gemeinsamer Antrieb vorgesehen ist, mit welchem bevorzugt die Trägermittel um eine, insbesondere horizontal verlaufende Rotationsachse verschwenkbar sind. Die Rotationsbewegung dieses Antriebs und/oder der Trägermittel kann nun über die Synchronisierungsmittel beispielsweise mechanisch in eine gekoppelte Rotationsbewegung der Tische relativ zu den Trägermitteln umgesetzt werden, insbesondere derart, dass die Tische bei der Rotationsbewegung parallel und horizontal zueinander ausgerichtet bleiben.

Im Hinblick auf die konkrete Ausgestaltung dieser Synchronisierungsmittel gibt es unterschiedliche Möglichkeiten. So können beispielsweise die mehreren Tische über eine Riemenanordnung mit dem gemeinsamen Antrieb gekoppelt werden, insbesondere derart, dass ein Verschwenkwinkel der Trägermittel um deren Rotationsachse einem Verschwenkwinkel der Tische relativ zu den Trägermitteln entspricht.

Zusätzlich oder alternativ zu einer Synchronisierung über Riemen, beispielsweise Zahnriemen oder Reibriemen kann eine Zahnradanordnung vorgesehen werden. Auch ist es denkbar eine pendelnde Bewegung der Tische zu realisieren, wobei in diesem Fall die Trägermittel Teil der Synchronisierungsmittel sein können und mindestens eine Parallelschwinge umfassen, wobei eine der Schwingen z.B. von den Trägermitteln gebildet ist, wobei die Schwingen der Parallelschwinge z.B. über ein Zahnrad gekoppelt sind. Auch ist es denkbar eine Zahnstangen-Zahnradkombination vorzusehen, wobei die Auslenkung der Zahnstange beispielsweise über eine Kurvenbahn gesteuert wird, in welcher die Zahnstange über eine Kurvenrolle geführt ist bzw. mit der die Zahnstange über eine Kurvenrolle gekoppelt ist.

Bei der Alternative mit als Träger für die Endverpackungsvorrichtungen ausgebildeten, vertikal verstellbaren Tischen werden die Endverpackungen in leerem Zustand, beispielsweise in der Beladeposition oder der Entnahmeposition positioniert und nach der Entnahme der Endverpackungen in der Entnahmeposition des Tisches wieder ausgeschleust. Grundsätzlich ist es denkbar kombinierte Zuführ- und Ausschleusemittel, beispielsweise in der Form eines gemeinsamen Transportbandes vorzusehen. Auch ist es denkbar separate Transportbänder für die Zuführung und Ausschleusung vorzusehen.

Die Erfindung führt auch auf eine Spritzgussanlage mit einer K Kavitäten zum gleichzeitigen Herstellen von K Kunststoffspritzgussteilen aufweisenden Spritzgussteilen aufweisenden Spritzgussvorrichtung, die derart ausgebildet ist, dass mit dieser Pipettenspitzen oder medizinische Reaktionsgefäße herstellbar sind. Diese Spritzgussanlage umfasst neben der Spritzgussvorrichtung eine nach dem Konzept der Erfindung ausgebildete Verpackungsvorrichtung.

Bevorzugt ist eine Öffnungs- und Schließrichtung des Spritzgusswerkzeugs in einer Horizontalebene und damit senkrecht zu der Vertikalebene ausgerichtet, relativ zu der bevorzugt vorgesehene mehrere Tische, insbesondere in einer gekoppelten Bewegung verstellbar sind.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Spritzgussvorrichtung mit einer Spritzgussform, die in dem gezeigten Ausführungsbeispiel eine fixe Anzahl von K = 16 Kavitäten zum gleichzeitigen Herstellen von K als Pipettenspitzen oder medizinische Reaktionsbehälter ausgebildeten Kunststoffspritzgussteilen aufweist,

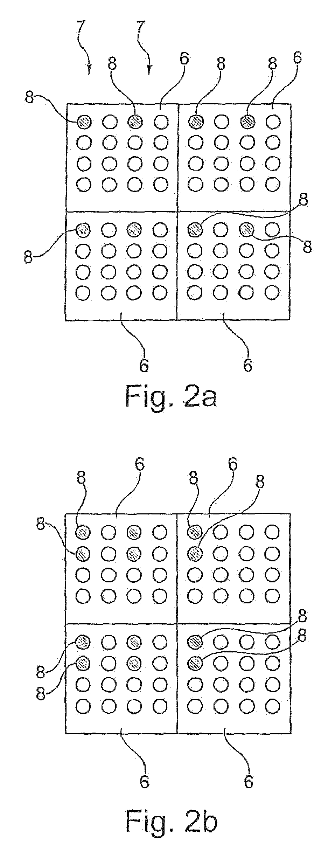

- Fig. 2a und 2b:: vier Endverpackungseinheiten nach jeweils einer unterschiedlichen Anzahl von Ablagezyklen, wobei in dem gezeigten Ausführungsbeispiel in jeder Endverpackungseinheit zwei Untergruppen entstehen (alternativ nur eine einzige Untergruppe oder mehr als zwei Untergruppen), die bei jedem Ablagezyklus, d.h. nach jeder Entnahme aus dem Zwischenpuffer um ein Spritzgussteil erweitert werden - bezüglich einer bevorzugteren Ausführungsform mit als Zwischenspeicher ausgebildeten Tischen wird als Ausführungsbeispiel auf die EP 2 323 930 B1 und insbesondere dort auf die Fig. 2a bis 3 mit zugehöriger Figurenbeschreibung verwiesen, wobei der Zwischenspeicher entgegen der EP 2 323 930 B1 vertikal verstellbar ist und dem Zwischenspeicher ein fakultativer Zwischenpuffer vorgeordnet ist,
- Fig. 3:: eine Verpackungsvorrichtung zur Ausführung des erfindungsgemäßen Verfahrens, und
- Fig. 4a bis Fig. 11d:: unterschiedliche Ausführungsformen von Tischanordnungen mit Verstellmitteln und teilweise Kopplungsmitteln.

In den Figuren sind gleiche Elemente und Elemente mit der gleichen Funktion mit den gleichen Bezugszeichen gekennzeichnet.

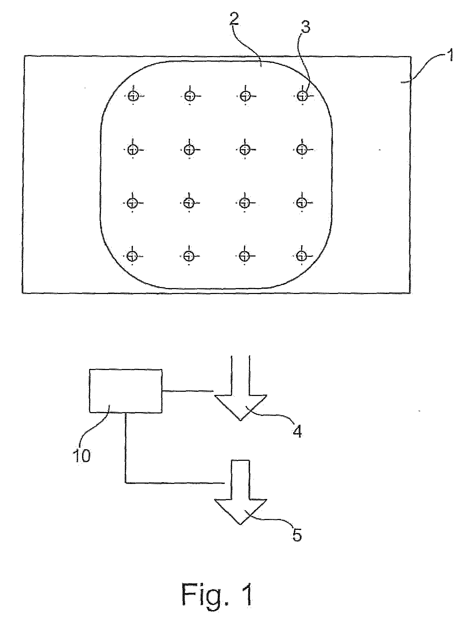

In Fig. 1 ist als Teil einer Spritzgussanlage eine Spritzgussvorrichtung 1, umfassend ein Spritzgusswerkzeug 2, mit K=16 Kavitäten 3 zum gleichzeitigen Herstellen von K=16 als Pipettenspitzen oder medizinische Reaktionsgefäße ausgebildeten Kunststoffspritzgussteilen 8 gezeigt. Der Spritzgussvorrichtung 1 sind beispielsweise als Sauggreifer, vorzugsweise mit einer der Anzahl K der Kavitäten entsprechenden Anzahl an Saugelementen, ausgebildete Entnahmemittel 4 zugeordnet, die lediglich stilisiert als Pfeil angedeutet sind, wobei die Entnahmemittel 4 Teil einer Verpackungsvorrichtung 16 sind. Die Entnahmemittel 4 dienen in dem gezeigten Ausführungsbeispiel ausschließlich zur Entnahme der Spritzgussteile 8 aus den Kavitäten 3, wobei die mittels der Entnahmemittel 4 entnommenen Spritzgussteile 8 als (Übergabe-) Greifer ausgebildete Ablagemittel 5 übergeben werden, mit welchen dann die Ablage auf einem nicht gezeigten, vertikal verstellbaren Tisch (von mehreren Tischen einer Wechseltischanordnung) oder zuvor eine Ablage bzw. Zwischenpufferung in einem nicht dargestellten Zwischenpuffer erfolgt.

Alternativ wird auf einen Zwischenpuffer verzichtet und die Gruppierung erfolgt unmittelbar auf einem später noch zu erläuternden, vertikal verstellbaren Tisch (von mehreren Tischen einer Wechseltischanordnung), welcher als Zwischenspeicher ausgebildet ist oder entnehmbare Endverpackungseinheiten (oder alternativ eine einzige Endverpackungseinheit) trägt. In dem konkreten Ausführungsbeispiel werden jedenfalls aus dem fakultativen Zwischenpuffer die Spritzgussteile gemäß einer ersten Alternative entweder in einem bevorzugt plattenförmigen als Zwischenspeicher ausgebildeten Tisch gruppiert und aus dem Zwischenspeicher nach der Gruppierung in Endverpackungseinheiten überführt oder es erfolgt gemäß einer zweiten Alternative unter Verzicht auf einen Zwischenspeicher unmittelbar die Gruppierung zu Untergruppen in den von dem mindestens einen Tisch getragenen Endverpackungseinheiten. Die Greifer der Entnahmemittel und der ersten Ablagemittel und der fakultativen zweiten Ablagemittel können beispielsweise als mechanische Greifer und/oder Unterdruckgreifer ausgebildet sein.

In den Figuren 2a und 2b ist nun die zuvor als zweite Alternative bezeichnete Ausführungsform gezeigt, nach welcher unter Verzicht auf einen Zwischenspeicher die Gruppierung unmittelbar in den von einem Tisch (von mehreren Tischen einer Wechseltischanordnung) getragenen Endverpackungseinheiten erfolgt. Bezüglich der bevorzugten Ausführungsform, bei welcher auf einen als Zwischenspeicher ausgebildeten, vertikal verstellbaren Tisch nicht verzichtet wird, sondern bei welcher die K Kunststoffspritzgussteile nach einer fakultativen Zwischenpufferung im Zwischenpuffer in einen als Zwischenspeicher ausgebildeten, vertikal verstellbaren Tisch gruppiert werden, wird auf die EP 2 323 930 B1 verwiesen und dort insbesondere auf die Figuren 2a bis 3 mit zugehöriger Figurenbeschreibung, wobei in diesem Dokument (selbstverständlich) nicht die Rede von der erfindungsgemäßen Vertikalverstellbarkeit des Zwischenspeichers und dem weiterbildungsgemäßen Zwischenpuffer ist, sondern die Gruppierung zu Untergruppen in dem Zwischenspeicher beschrieben wird, wie sie bevorzugt auch bei dem erfindungsgemäßen Verfahren zur Anwendung kommt. Ein etwaiger Zwischenpuffer befindet sich gedanklich vor dem beschriebenen Zwischenspeicher und ist bevorzugt horizontal verstellbar.

Jedenfalls sind in den Fig. 2a und 2b vier Endverpackungseinheiten 6 dargestellt, die bei jedem Ablageschritt gleichzeitig befüllt werden. In dem gezeigten Ausführungsbeispiel weist jede Endverpackungseinheit A = 16 Ablageplätze zur maximalen Aufnahme von A = 16 Kunststoffspritzgussteilen 8 auf, wobei A (anstatt 16 auch jede andere ganze Zahl sein kann). Im gezeigten Ausführungsbeispiel besteht die Aufgabe darin, jede Endverpackungseinheit 6 mit jeweils U = zwei Untergruppen 7 von Kunststoffspritzgussteilen 8 zu befüllen, wobei jede Untergruppe 7 in dem gezeigten Ausführungsbeispiel kavitätenrein sein sollen, d.h. Kunststoffspritzgussteile nur aus einer Kavität beinhalten soll. Jede Untergruppe besteht in dem gezeigten Ausführungsbeispiel aus L = acht Kunststoffspritzgussteilen 8. Zur vollständigen Befüllung der Endverpackungseinheiten 6 sind also acht Entnahme- und Ablagezyklen in den Endverpackungen (nach jeweils vorheriger Ablage im Zwischenpuffer) notwendig, wenn bei jedem Ablagezyklus jede Untergruppe 7 um ein Kunststoffspritzgussteil erweitert wird und gleichzeitig zwei Kunststoffspritzgussteile 8 pro Endverpackungseinheit 6 abgelegt werden. Der Tisch, auf dem die Endverpackungseinheiten 6 angeordnet sind, ist nicht dargestellt.

Fig. 2a zeigt dabei die Befüllsituation nach einem einzigen Ablagezyklus und Fig. 2b nach zwei nacheinanderfolgenden Ablagezyklen. Eine Vorgruppierung der Kunststoffspritzgussteile 8 in einem Zwischenspeicher, wie dies in der EP 2 323 930 B1 im Detail beschrieben und bevorzugt ist, erfolgt ausdrücklich nicht. Sämtliche Endverpackungseinheiten 6 sind, wie zuvor beschrieben, mit jeweils mehreren, kavitätenreinen Untergruppen 7 zu befüllen. Hierzu steuert eine in Fig. 1 angedeutete Steuereinheit 9 (Steuermittel) die Entnahmemittel 4 und die zweiten Ablagemittel 5 sowie weitere, nicht gezeigte erste Ablagemittel entsprechend an.

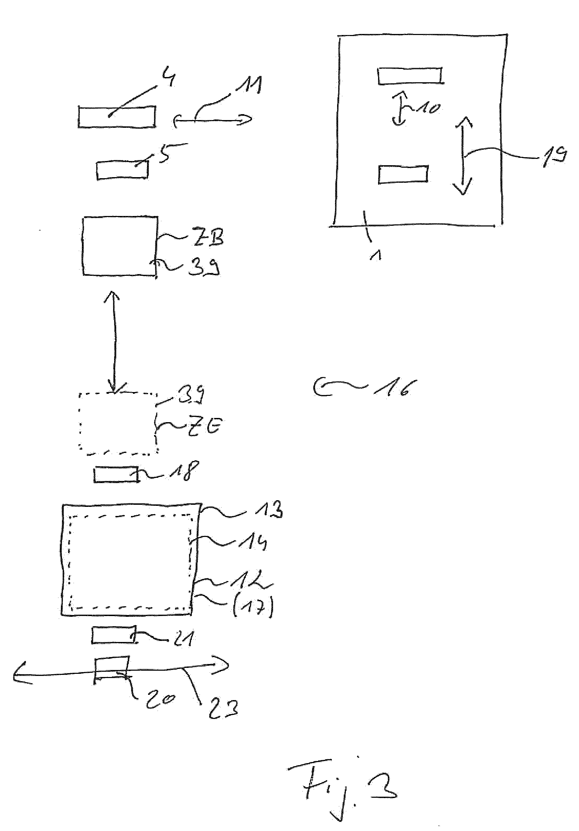

In Fig. 3 ist eine Spritzgussanlage mit einer Spritzgussvorrichtung 1 sowie einer Verpackungsvorrichtung 16 gezeigt. Letzte umfasst Entnahmemittel 4, mit denen gleichzeitig K Kunststoffspritzgussteile aus K Kavitäten der Spritzgussvorrichtung 1 entnommen werden können. Die Entnahmemittel können einen (kurzen) Entnahmehub 10 vollführen, wobei dieser Entnahmehub 10 in Öffnungsrichtung 19 des Spritzgusswerkzeugs der Spritzgussvorrichtung 1 erfolgt, wenn sich die Entnahmemittel 4 zwischen den Teilformen befinden. Nach der Entnahme werden die Entnahmemittel 4 senkrecht zur Öffnungsrichtung 19 des Werkzeugs entlang einer horizontalen Achse 11 bewegt, um in den Bereich von fakultativen zweiten Ablagemitteln 5 zu gelangen, mit denen die Kunststoffspritzgussteile 5 von den Entnahmemitteln 4 übernommen und nach einer Schwenkbewegung nach unten um 90° in einen fakultativen Zwischenpuffer abgelegt werden, während sich der Zwischenpuffer 39 in einer Zwischenpuffer-Beladeposition (ZB) befindet. In dieser Zwischenpuffer-Beladeposition (ZB) wird der Zwischenpuffer 39 nur beladen und erst nach dem Verstellen entlang einer Horizontalachse in einer Zwischenpuffer-Entnahmeposition (ZE) beladen, welche sich horizontal beabstandet zu der Zwischenpuffer-Beladeposition (ZB) befindet.

Auch ist es möglich, dass die Zwischenpuffer-Entnahmeposition (ZE) und die Zwischenpuffer-Beladeposition (ZB) entlang einer senkrecht zur Horizontalachse verlaufenden Vertikalachse beabstandet, insbesondere übereinander angeordnet sind. Auch ist eine kombinierte vertikale und horizontale Beabstandung der Zwischenpuffer-Entnahmeposition (ZE) und der Zwischenpuffer-Beladeposition (ZB) realisierbar. Auch ist es möglich, dass vollkommen auf einen Zwischenpuffer 39 und folglich bevorzugt auch auf die zweiten Ablagemittel 5 verzichtet wird. In diesem Fall werden die K Kunststoffspritzgussteile von den Entnahmemitteln 4 bevorzugt unmittelbar mit ersten Ablagemitteln 18 übernommen und auf einen, im Folgenden noch zu erläuternden, in einer Beladeposition befindlichen Tisch 12 überführt, der nach der fertigen Beladung mit einer Mehrzahl von Schüssen aus der Beladeposition nach oben oder unten, jedenfalls entlang einer Vertikalachse, beispielsweise im Wege einer rotatorischen Bewegung mit geeigneten Verstellmitteln verstellt wird um dort entladen zu werden. Dabei kann der Tisch 12, wie ebenfalls noch erläutert werden wird als Zwischenspeicher ausgebildet werden, in dem die Untergruppen gebildet werden, die dann in der Entnahmeposition 14 des Zwischenspeichers (Tisches 12) entnommen und in mindestens eine Endverpackungseinheit überführt bzw. vorzugsweise auf mehrere Endverpackungseinheiten verteilt werden. Alternativ ist es denkbar, dass der Tisch 12 unmittelbar mindestens eine Endverpackungseinheit, vorzugsweise mehrere Endverpackungseinheiten trägt, die in der Beladeposition des Tisches 12 bestückt, d.h. mit den Kunststoffspritzgussteilen beladen werden, wobei die Gruppierung zu den Untergruppen dann unmittelbar in der mindestens einen von dem Tisch 12 getragenen Endverpackungseinheiten erfolgt. Nach Verstellen in die vertikal beabstandete Entnahmeposition 14 werden dann bei dieser Ausführungsform die Endverpackungseinheiten aus bzw. von dem Tisch 12 entnommen.

Anstatt die Kunststoffspritzgussteile von den Entnahmemitteln unmittelbar mittels der ersten Ablagemittel 18 zu entnehmen kann noch ein Übergabegreifer zwischengeschaltet werden, auf den jedoch bevorzugt verzichtet wird.

In dem gezeigten Ausführungsbeispiel mit fakultativem Zwischenpuffer erfolgt die Übernahme der K Kunststoffspritzgussteile von den Entnahmemitteln 4 unmittelbar mittels der zweiten, einen Greifer umfassenden Ablagemittel 5, wobei alternativ noch ein Übergabegreifer zwischengeschaltet werden kann, auf den jedoch bevorzugt verzichtet wird. Zur Ablage der Kunststoffspritzgussteile in den Zwischenpuffer kann der Greifer der ersten Ablagemittel 5 einen Vertikalhub vollführen und wird nach der Beladung aus der zuvor diskutierten, hier beispielhaft hinteren Zwischenpuffer-Beladeposition (ZB) in eine beispielhaft horizontal beabstandeten Zwischenpuffer-Entnahmeposition (ZE), insbesondere im Rahmen einer translatorischen Bewegung verstellt. Die Zwischenpuffer-Entnahmeposition (ZE) kann sich seitlich benachbart der Beladeposition 13 des Tisches 12 befinden oder unter- oder oberhalb.

Jedenfalls erfolgt die Beladung des sich in der Beladepostion 13 befindlichen Tisches jeweils mit K Kunststoffspritzgussteilen 8, die zu Untergruppen gruppiert werden, entweder unmittelbar in von dem Tisch gebildeten Zwischenspeicher 17 oder in mindestens einer von dem Tisch 12 getragenen Endverpackungseinheit.

Jedenfalls wird der Tisch 12 der Wechseltischanordnung nach fertiggestellter Untergruppenbildung von der Beladeposition 13 in die Entnahmeposition 14 verstellt. Durch die vertikale Übereinanderordnung der Beladeund Entnahmeposition 13, 14 ist eine besonders flächensparende Ausbildung der Vorrichtung möglich. Die Entnahme der K Kunststoffspritzgussteile aus dem fakultativen Zwischenpuffer 39 in seiner Zwischenpuffer-Entnahmeposition (ZE) und die Ablage in den Untergruppen unmittelbar im Tisch 12 oder in der mindestens einen von dem Tisch 12 getragenen Endverpackungseinheit erfolgt mit Hilfe der ersten Ablagemittel 18, die wie eingangs erläutert, bei Verzicht auf eine Zwischenpuffermimik entweder unmittelbar die K Kunststoffspritzgussteile von den Entnahmemitteln 4 oder von einem zwischengeschalteten fakultativen Übergabegreifer übernehmen können.

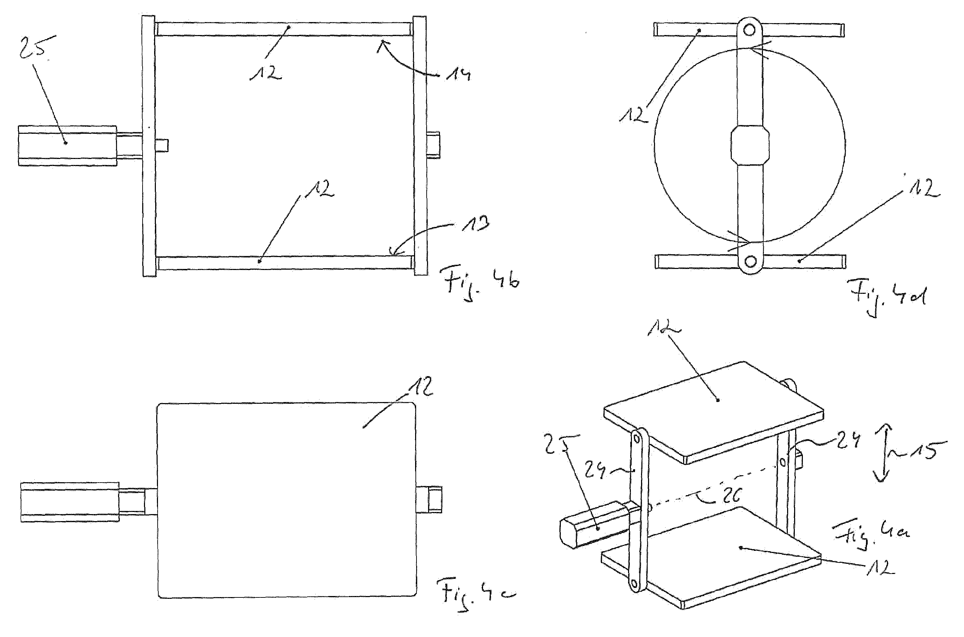

Die vorerwähnte Bewegung des Tisches 12 aus der Beladeposition 13 in die vertikal beabstandete Entnahmeposition 14 erfolgt in einer gekoppelten Bewegung derart, dass ein weiterer Tisch 12, der später anhand der Fig. 4b-10d erläutert werden wird, von der Entnahmeposition 14 in die Beladeposition 13 verstellt wird.

Jedenfalls erfolgt entweder in der Entnahmeposition 14 ein Entladen der mit Untergruppen befüllten Entnahmevorrichtungen von dem Tisch 12 oder aus dem in der Entnahmeposition 14 befindlichen Tisch 12 heraus erfolgt die Beladung von Endverpackungseinheiten, wobei es bevorzugt ist, wenn nacheinander Endverpackungseinheiten befüllt werden und zwar jeweils mit einer einzigen oder mit mehreren Untergruppen aus dem Zwischenspeicher 17, der dann vor dem Tisch 12 gebildet wird. Alternativ werden mehrere Verpackungseinheiten gleichzeitig aus dem als Zwischenpuffer 17 ausgebildeten Tisch 12 mit einer einzigen oder mit mehreren Untergruppen befüllt.

Bei der letzten Variante erfolgt das Beladen der Endverpackungseinheiten mit einem weiteren Greifermechanismus, insbesondere einem Vakuumgreifer. Bei einer Ausführungsform, bei der die Endverpackungen von dem Tisch 12 getragen werden und die Gruppierung unmittelbar in den Endverpackungen vorgenommen wird, kann auf diesen Greifermechanismus verzichtet werden.

Bei der alternativen Ausführungsform ist mit dem Bezugszeichen 21 ein Mechanismus zur Entnahme der Endverpackungen von dem Tisch 12 gekennzeichnet. Das Ausschleusen der Endverpackungseinheiten 20 erfolgt mit geeigneten Ausschleusemitteln 23 und die Zuführung mit nicht gezeigten Zuführmitteln.

Wie erläutert, umfasst die Verpackungsvorrichtung 16 bevorzugt nicht nur einen sondern mehrere Tische, insbesondere ausschließlich zwei Tische, die zwischen der Beladeposition 13 und der Entnahmeposition 14, welche vertikal voneinander beabstandet sind verstellt werden können. Im Folgenden werden unterschiedliche Ausführungsformen von Tischanordnungen erläutert:

In den Fig. 4 bis 4d ist eine Anordnung von zwei Tischen 12 als sogenannte Wechseltischanordnung gezeigt. Zu erkennen ist die plattenförmige bzw. flächige Ausgestaltung der Tische 12 in horizontaler Ausrichtung, wobei diese Ausrichtung während der gesamten Verstellbewegung gleich bleibt. Den Tischen 12, die entlang einer Vertikalachse 15 beabstandet sind, sind Trägermittel 24 zugeordnet, die über einen Antrieb 25 rotatorisch um eine gedachte Rotationsachse 26 antreibbar sind. Die Trägermittel 24 bilden Kopplungsmittel, die die Bewegung der Tische um die Rotationsachse koppeln. In dem gezeigten Ausführungsbeispiel ist als Antrieb 25 beispielhaft ein Servomotor vorgesehen, mit dessen Motorwelle die Trägermittel fest verbunden sind. Gelenkig mit den Trägermitteln 24 verbunden sind die Tische 12, so dass die Trägermittel 24 relativ zu den horizontal und parallel orientierten Tischen 12 verschwenkbar sind. Lediglich beispielhaft ist in Fig. 4b eine unterste Position entlang der Vertikalachse 15 als Beladeposition 13 bezeichnet und eine Entnahmeposition 14 als oberste Position, wobei diese Positionen auch vertauscht sein können. Wesentlich ist, dass die Tische 12 zwischen den beiden Positionen 13, 14 entlang der Vertikalachse 15, hier in einer rotatorischen Bewegung verstellbar angeordnet sind.

In den Fig. 4a bis 4d ist die Tischanordnung (hier Wechseltischanordnung) sehr grundsätzlich bzw. prinzipiell gezeigt. Die horizontale Ausrichtung erfolgt hier ausschließlich schwerkraftbedingt, wozu es notwendig ist die Tische 12 gleichmäßig zu beladen um ein Verkippen um deren Relativverschwenkachsen zu den Trägermitteln 24 zu verhindern. Bevorzugt sind die im Folgenden erläuterten Ausführungsformen, bei welchen ein ungewolltes Verschwenken um die jeweilige Relativverschwenkachse sicher vermieden wird.

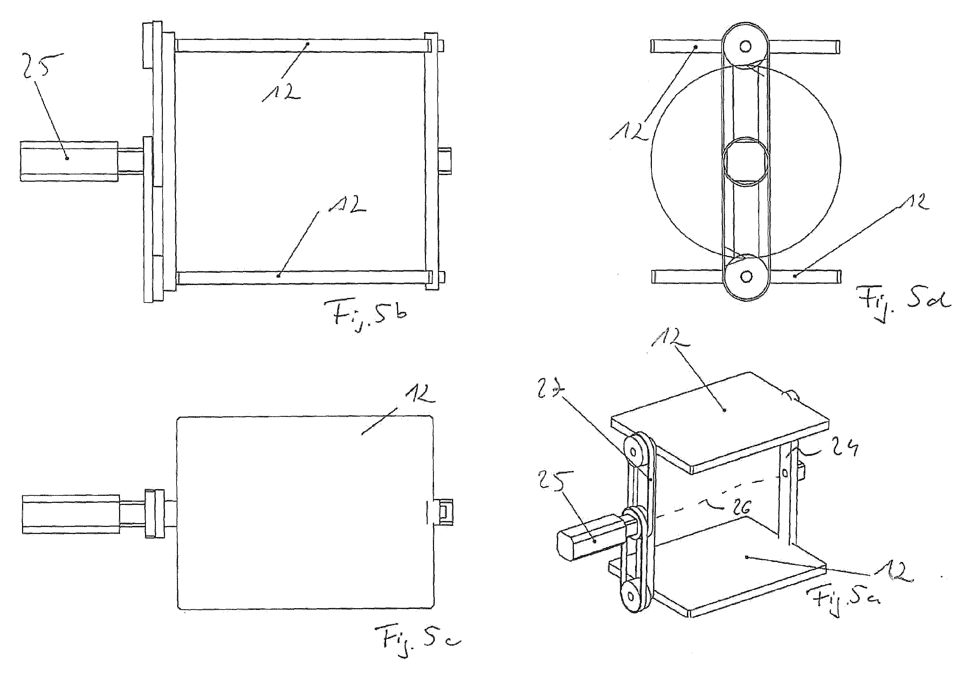

Zu letztgenanntem Zweck dienen in Fig. 5a bis 5d zusätzlich vorgesehene Synchronisierungsmittel 27, hier beispielhaft in Form von Riemen, besonders bevorzugt Zahnriemen. Diese koppeln, d.h. synchronisieren die Verschwenkbewegung der Tische 12 relativ zu den Trägermitteln 24 mit der Rotation der Trägermittel 24 um die gedachte Rotationsachse 26. Hierzu ist jeder Tisch 12 bzw. eine drehfest mit dem jeweiligen Tisch 12 verbundene Riemenscheibe gekoppelt mit einer weiteren Riemenscheibe, die gemeinsam mit den Trägermitteln 24 um die Rotationsachse 26 rotiert. Zu erkennen ist, dass ein einziger gemeinsamer Antrieb 25 zum Antreiben der Trägermittel zum einen und zum Antreiben der Tische 12 zum anderen vorgesehen ist.

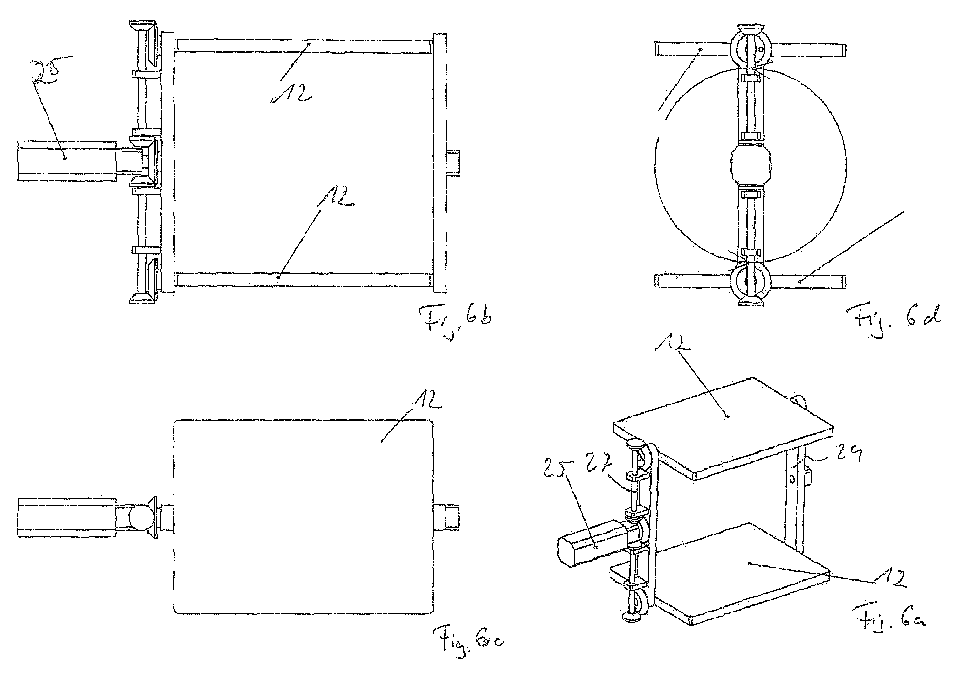

Das Ausführungsbeispiel gemäß den Fig. 6a bis 6d entspricht dem Ausführungsbeispiel gemäß Fig. 5a bis 5d mit dem Unterschied, dass hier die Synchronisierungsmittel 27 keinen Riementrieb sondern Königswellen umfassen, die die Rotationsbewegung des Antriebs 25 in eine gekoppelte Rotationsbewegung der Tische 12 relativ zu den Trägermitteln 24 umwandeln. Hierzu greifen die Königswellen zum einen auf ein, beispielsweise als Kegelrad ausgebildetes Antriebsrad des Antriebs 25 und zum anderen auf ein dem jeweiligen Tisch 12 zugeordnetes, beispielsweise ebenfalls als Kegelrad ausgebildetes Abtriebsrad.

Die bis dahin beschriebenen Ausführungsbeispiele der Tischanordnungen können sowohl derart betrieben werden, dass sie immer auf einer umlaufenden Bahn, d.h. immer in dieselbe Richtung angetrieben werden, oder pendelnd.

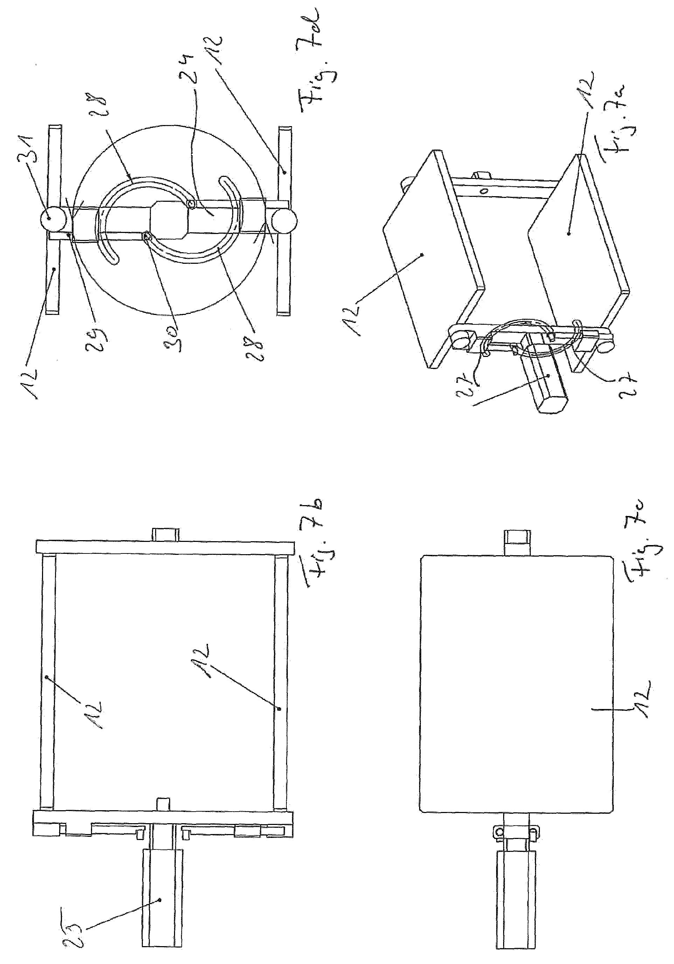

Das Ausführungsbeispiel gemäß den Fig. 7a bis 7d ist ausschließlich pendelnd betreibbar. Hier umfassen die Synchronisierungsmittel 27 Führungskulissen 28, in welchen jeweils eine fest an den Trägermitteln angeordnete oder diese bildende Zahnstange 29, hier beispielhaft über jeweils eine Rolle 30 geführt ist. Jede Zahnstange 29 wirkt mit einem drehfest mit dem zugehörigen Tisch 12 verbundenen Zahnrad 31 zusammen, derart, dass eine Rotationsbewegung der Trägermittel 24 in einer Relativverschwenkbewegung der Tische 12 zu den Trägermitteln 24 resultiert, derart, dass die Tische 12 parallel ausgerichtet bleiben.

Bis hierin waren die zuvor beschriebenen Ausführungsbeispiele, bis auf das Ausführungsbeispiel gemäß den Fig. 4a bis 4d ausschließlich mit mechanischen Synchronisierungsmitteln versehen.

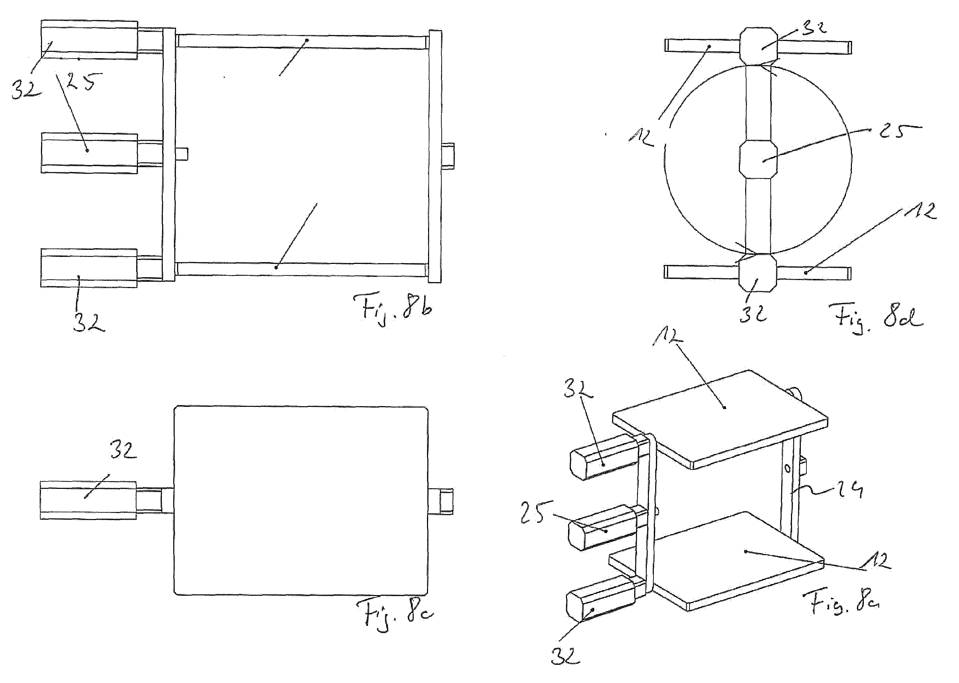

In dem Ausführungsbeispiel gemäß den Fig. 8a bis 8d ist die Bewegung der Tische 12 und des Antriebs 25 und damit der Trägermittel 24 elektronisch gekoppelt. Zu diesem Zweck ist neben dem Antrieb 25 für die Trägermittel 24 jedem Tisch 12 ein an den Trägermitteln 24 fixierter Tischantrieb 32 in Form eines Elektromotors zugeordnet, wobei die Rotationsbewegung des Antriebmotors 25 elektronisch synchronisiert bzw. gekoppelt wird mit den Drehbewegungen der Antriebe der Tischantriebe 32.

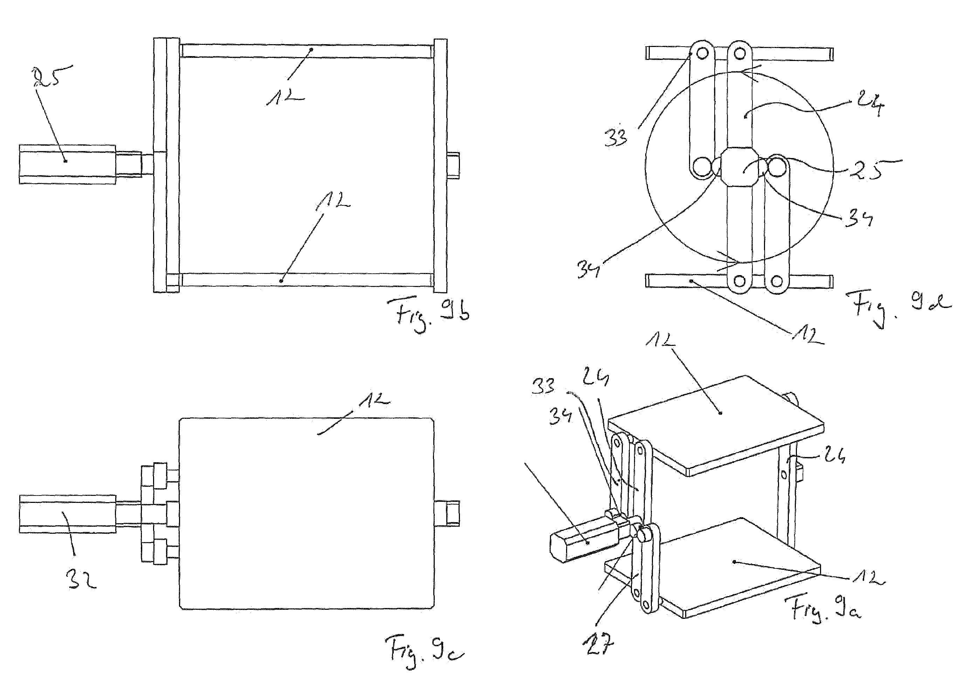

Bei dem Ausführungsbeispiel gemäß den Fig. 9a bis 9d sind die Trägermittel 24 Bestandteil der Synchronisierungsmittel 27, welche in dem gezeigten Ausführungsbeispiel Parallelschwingen umfassen. Anders ausgedrückt, verläuft parallel zu den Trägermitteln 24 für jeden Tisch 12 jeweils eine Parallelschwingung 33, welche über ein Zwischenzahnrad 34 mit den Trägermitteln 24 und damit mit dem Antrieb 25 gekoppelt ist, um somit eine Parallelbewegung der Tische 12 zueinander zu erreichen.

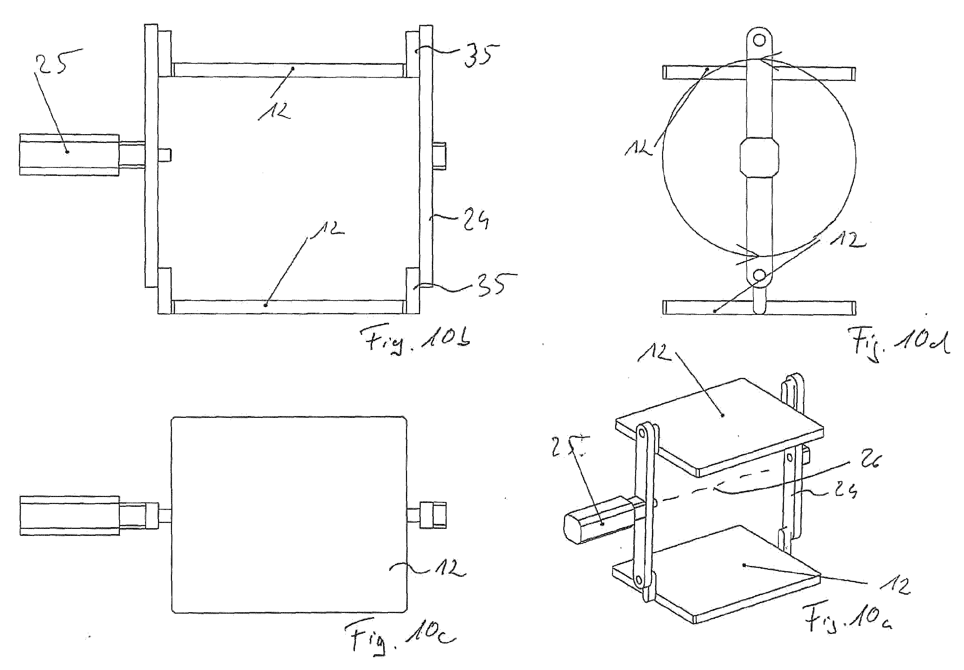

Das Ausführungsbeispiel gemäß den Fig. 10a bis 10d zeigt eine Zwischenpufferanordnung ohne gegenständliche Kopplungsmittel. Hier erfolgt die Parallelisierung der Tische 12 bei ihrer Rotationsbewegung rein schwerkraftbedingt. Hierzu sind die Tische 12 an sich über die Ebene der Tische 12 hinaus erstreckenden Haltearmen 35 angeordnet, die wiederum gelenkig mit den Trägermitteln 24 verbunden sind. Anders ausgedrückt sind die Tische 12 jeweils in der Art eines Pendels mit den Trägermitteln 24 gelenkig verbunden und richten sich automatisch bei einer Rotationsbewegung der Trägermittel 24 um die Rotationsachse 26 parallel zueinander und horizontal aus.

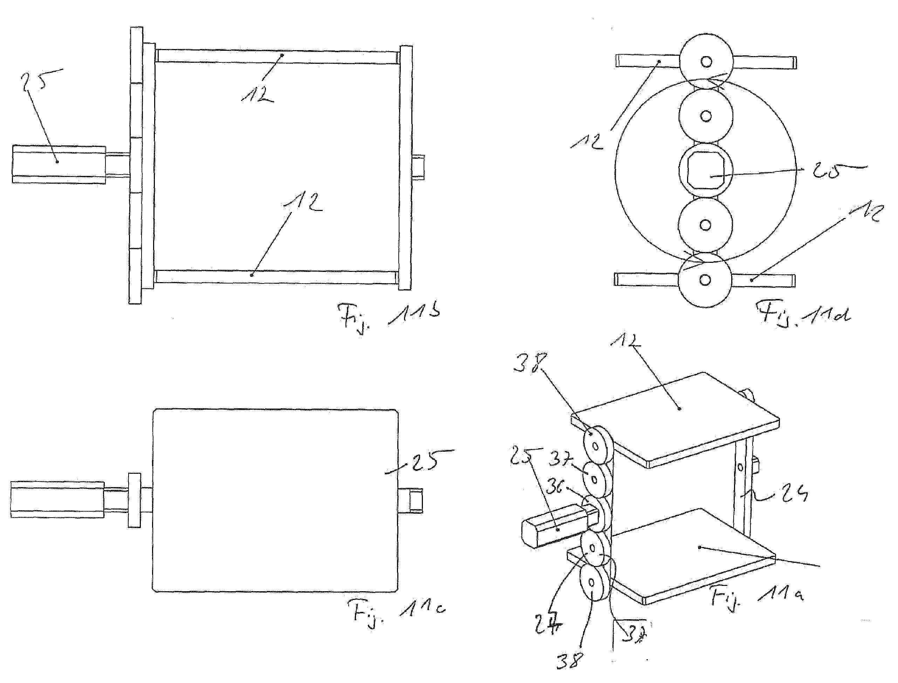

Bei dem Ausführungsbeispiel gemäß den Fig. 11a bis 11d umfassen die Synchronisierungsmittel 27 eine Zahnradanordnung, derart, dass ein drehfest mit dem gemeinsamen Antrieb 25 verbundenes Zahnrad 36 jeweils über ein Zwischenzahnrad 37 mit einem drehfest mit dem zugehörigen Tisch 12 verbundenen Abtriebszahnrad 38 verbunden ist, wobei das Zwischenzahnrad 37 rotierbar an den Trägermitteln 24 angeordnet ist.

### Bezugszeichenliste

- 1: Spritzgussvorrichtung
- 2: Spritzgusswerkzeug
- 3: Kavitäten
- 4: Entnahmemittel
- 5: zweite Ablagemittel
- 6: Endverpackungseinheiten
- 7: Untergruppen
- 8: Kunststoffspritzugssteile
- 9: Steuereinheit (Steuermittel)
- 10: Entnahmehub
- 11: Achse
- 12: Tisch(e)
- 13: Beladeposition
- 14: Entnahmeposition
- 15: Vertikalachse
- 16: Verpackungsvorrichtung
- 17: Zwischenspeicher
- 18: erste Ablagemittel
- 19: Öffnungsrichtung
- 20: Endverpackungseinheit
- 21: Greifermechanismus / oder Entnahmemittel für Endverpackungseinheiten
- 23: Ausschleusmittel
- 24: Trägermittel
- 25: Antrieb
- 26: Rotationsachse
- 27: Synchronisierungsmittel
- 28: Führungskulissen
- 29: Zahnstange
- 30: Rolle
- 31: Zahnrad
- 32: Tischantrieb
- 33: Pendelschwingung
- 34: Zwischenzahnrad
- 35: Haltearme
- 36: Zahnrad
- 37: Zwischenzahnrad
- 38: Abtriebszahnrad
- 39: Zwischenpuffer

- ZB: Zwischenpuffer-Beladeposition
- ZE: Zwischenpuffer-Entnahmeposition

## Patentansprüche

1. Verpackungsverfahren zum Verpacken von als Pipettenspitzen oder medizinische Reaktionsgefäße ausgebildeten Kunststoffspritzgussteilen (8) in Endverpackungseinheiten (6), umfassend die Schritte:
- gleichzeitige Entnahme von K Spritzgussteilen aus K Kavitäten,
- gleichzeitige Ablage der K Kunststoffspritzgussteile (8), gleichmäßig verteilt auf U Untergruppen (7) mit Hilfe von einen Greifer umfassenden ersten Ablagemitteln (5) in einer, bevorzugt horizontalen, Ablageebene,
- mehrfaches Entnehmen von K Spritzgussteilen aus den K Kavitäten und gleichmäßiges Verteilen der K Spritzgussteile auf die U Untergruppen (7), bis jede Untergruppe (7) L Kunststoffspritzgussteile (8) aufweist, wobei die Anzahl L der Kunststoffspritzgussteile (8) einer Untergruppe (7) der Anzahl A der in einer Endverpackungseinheit (6, 20) maximal aufnehmbaren Kunststoffspritzgussteilen (8) oder einem ganzzahligen Teiler von A entspricht,
- Auffüllen mindestens einer Endverpackungseinheit (6, 20) mit A Kunststoffspritzgussteilen (8),
**dadurch gekennzeichnet,**
**dass** das Verteilen der K Kunststoffspritzgussteile (8) auf die Untergruppen auf einem in einer Beladeposition (13) befindlichen Tisch (12) einer mehrere Tische (12) umfassenden Wechseltischanordnung erfolgt, der nachdem jede Untergruppe (7) mit L Kunststoffspritzgussteilen befüllt wurde aus der Beladeposition (13) in eine entlang der Vertikalachse von der Beladeposition beabstandete Entnahmeposition (14) verstellt wird, wobei die Tische (12) der Wechseltischanordnung in einer gekoppelten Bewegung entlang der Vertikalachse (15) verstellt werden, derart, dass sich immer einer der Tische (12) in der Beladeposition (13) befindet, wenn sich ein anderer der Tische (12) in der Entnahmeposition (14) befindet, wobei die in der Entnahmeposition (14) und in der Beladeposition (10) befindlichen Tische (12) vertikal zumindest abschnittsweise in einer Flucht liegen.

2. Verpackungsverfahren nach Anspruch 1,
**dadurch gekennzeichnet,**
**dass** der Tisch (12) als Zwischenspeicher (17) ausgebildet ist, aus dem gleichzeitig eine einzige oder aus dem gleichzeitig mehrere Endverpackungseinheiten (6, 20) beladen werden, und dass der als Zwischenspeicher (17) ausgebildete Tisch (12) eine Vielzahl von in einer Ablageebene nebeneinander angeordneten Ablagepositionen aufweist, und dass solange K Kunststoffspritzgussteile (8) aus den K Kavitäten entnommen und gleichmäßig auf die U Untergruppen (7) in dem Zwischenspeicher (17) verteilt werden, bis jede Untergruppe (7) L Kunststoffspritzgussteile (8) aufweist, wobei die Anzahl L der Kunststoffspritzgussteile (8) einer Untergruppe (7) der Anzahl A von maximal in eine Endverpackungseinheit (6, 20) ladbaren Kunststoffspritzgussteilen (8) oder einem ganzzahligen Teiler von A entspricht, oder,
**dass** auf dem Tisch mindestens eine, bevorzugt mehrere Endverpackungseinheiten angeordnet wird/werden und das Verteilen der K Kunststoffspritzgussteile (8) auf die Untergruppen (7) ausschließlich beim Auffüllen der mindestens einen Endverpackungseinheit (6) in der mindestens einen auf dem in der Beladeposition befindlichen Tisch angeordneten Endverpackungseinheit (6) erfolgt und dass solange Kunststoffspritzgussteile (8) auf die Untergruppen (7) verteilt werden, bis die mindestens eine Endverpackungseinheit (6) vollständig mit A Kunststoffspritzgussteilen (8) befüllt ist.

3. Verfahren nach Anspruch 2,
**dadurch gekennzeichnet,**
**dass** die K Kunststoffspritzgussteile (8) derart auf dem als Zwischenspeicher (17) ausgebildeten Tisch (12) abgelegt werden, dass die Anzahl U der Untergruppen (7) der Anzahl V der Endverpackungseinheiten (6, 20) oder einem ganzzahligen Vielfachen von V nicht entspricht oder entspricht.

4. Verfahren nach einem der Ansprüche 2 oder 3,
**dadurch gekennzeichnet,**
**dass** als Tisch (12) (Zwischenspeicher (17)) eine Platte mit einer der Ablagepositionen entsprechenden Anzahl von Vertiefungen oder Aufsteckelementen verwendet wird.

5. Verpackungsverfahren nach einem der vorhergehenden Ansprüche,
**dadurch gekennzeichnet**,
die Tische (12) in einer rotatorischen Bewegung entlang der Vertikalachse (15) verstellt werden.

6. Verpackungsverfahren nach einem der vorhergehenden Ansprüche,
**dadurch gekennzeichnet,**
**dass** die Tische (12) derart in der gekoppelten Bewegung entlang der Vertikalachse verstellt werden, dass die Tische (12) während der Verstellbewegung parallel, und bevorzugt horizontal, zueinander ausgerichtet bleiben.

7. Verpackungsvorrichtung zum Verpacken von als Pipettenspitzen oder medizinische Reaktionsgefäße ausgebildeten Kunststoffspritzgussteilen (8) in Endverpackungseinheiten (6, 20), insbesondere ausgebildet zur Durchführung eines Verpackungsverfahrens nach einem der vorhergehenden Ansprüche, umfassend:
- zum gleichzeitige Entnehmen von K Spritzgussteilen aus K Kavitäten (3) ausgebildeten Entnahmemitteln (4),
- zum gleichzeitigen Ablegen der K Kunststoffspritzgussteile (8), gleichmäßig verteilt auf U Untergruppen (7) ausgebildete einen Greifer umfassende erste Ablagemittel (5)
- Zuführmittel (22) zum Zuführen von Endverpackungseinheiten (6, 20) sowie Ausschleusmitteln (23) zum Ausschleusen von befüllten Verpackungseinheiten aus der Verpackungsvorrichtung (16),
- Mittel zum Auffüllen mindestens einer Endverpackungseinheit (6, 20) mit A Kunststoffspritzgussteilen (8),
- Steuermittel (9) zum Ansteuern der Entnahmemittel (4) und/oder der ersten Ablagemittel (18), die diese derart ansteuernd ausgebildet sind, dass mehrfache K Spritzgussteile aus den K Kavitäten (3) entnehmbar und gleichmäßig auf die U Untergruppen (7) verteilbar sind bis jede Untergruppe L Kunststoffspritzgussteile (8) aufweist, wobei die Anzahl L der Kunststoffspritzgussteile (8) einer Untergruppe (7) der Anzahl A der in einer Endverpackungseinheit (6, 20) maximal aufnehmbaren Kunststoffspritzgussteilen (8) oder einem ganzzahligen Teiler von A entspricht,
**dadurch gekennzeichnet,**
**dass** eine Wechseltischanordnung mit mehreren Tischen (12) vorgesehen ist, wobei die Verpackungsvorrichtung derart konfiguriert ist, dass auf einem in einer Beladeposition (13) angeordneten Tisch (12) der Tische (12) der Wechseltischanordnung die Ablage der K Kunststoffspritzgussteile in den Untergruppen erfolgt und dass der Tisch (12) nach dem Beladen jeder Untergruppe mit L Kunststoffspritzgussteilen aus der Beladeposition (13) in eine entlang einer Vertikalachse von der Beladeposition (13) beabstandete Entnahmeposition (14) verstellt wird, und dass die Tische (12) in einer gekoppelten Bewegung entlang der Vertikalachse (15) verstellt werden, dass die Tische (12) mithilfe der Verstellmittel derart gekoppelt verstellt werden, dass sich immer einer der Tische (12) in der Beladeposition (13) befindet, wenn sich ein anderer der Tische (12) in der Entnahmeposition (14) befindet, wobei die in der Entnahmeposition (14) und in der Beladeposition (13) befindlichen Tische (12) vertikal zumindest abschnittsweise in einer Flucht liegen.

8. Verpackungsvorrichtung nach Anspruch 7,
**dadurch gekennzeichnet,**
**dass** der mindestens eine Tisch (12) als Zwischenspeicher (17) ausgebildet ist, aus dem gleichzeitig eine einzige oder aus dem gleichzeitig mehrere Endverpackungseinheiten (6, 20) beladbar sind, und dass der als Zwischenspeicher (17) ausgebildete Tisch (12) eine Vielzahl von in einer, insbesondere horizontalen, Ablageebene nebeneinander angeordnete Ablagepositionen aufweist, und dass die Steuermittel die Entnahmemittel und/oder die ersten Ablagemittel (18) derart ansteuernd ausgebildet sind, dass so lange K Kunststoffspritzgussteile (8) aus den K Kavitäten entnommen und gleichmäßig auf die U Untergruppen (7) in dem Zwischenspeicher (17) verteilbar sind, bis jede Untergruppe (7) L Kunststoffspritzgussteile (8) aufweist, wobei die Anzahl L der Kunststoffspritzgussteile (8) eine Untergruppe (7) der Anzahl A von maximal in eine Endverpackungseinheit (6, 20) ladbaren Kunststoffspritzgusssteilen oder einem nur ganzzahligen Teiler von A entspricht,
oder,
**dass** auf dem Tisch (12) mindestens eine, bevorzugt mehrere Endverpackungseinheiten angeordnet und/oder anordenbar ist/sind, und dass die Steuermittel die ersten Ablagemittel (18) derart ansteuernd ausgebildet sind, dass das Verteilen der K Kunststoffspritzgussteile (8) auf die Untergruppen (7) ausschließlich (Auffüllen der mindestens einen auf dem Tisch (12) befindlichen Endverpackungseinheit (6) in der Endverpackungseinheit (6) erfolgt und dass Steuermittel die ersten Ablagemittel derart ansteuernd ausgebildet sind, dass so lange Kunststoffspritzgussteile (8) auf die Untergruppen (7) verteilt werden, bis die mindestens eine auf dem Tisch (12) befindliche Endverpackungseinheit (6) vollständig mit A Kunststoffspritzgussteilen (8) befüllt ist.

9. Verpackungsvorrichtung nach einem der Ansprüche 7 oder 8,
**dadurch gekennzeichnet,**
**dass** die Tische (12), insbesondere ausschließlich zwei Tische (12) oder mehr als zwei Tische (12), derart gekoppelt entlang der Vertikalachse (15) verstellbar sind, dass die Tische (12) während der gesamten Bewegung einen gleichen Winkel zur Vertikalen aufweisen, insbesondere horizontal ausgerichtet bleiben.

10. Verpackungsvorrichtung nach Anspruch 9,
**dadurch gekennzeichnet,**
**dass** die gekoppelte Bewegung als Rotationsbewegung realisiert ist.

11. Verpackungsvorrichtung nach einem der Ansprüche **7 bis 10,**
**dadurch gekennzeichnet,**
**dass** die Tische (12) gelenkig mit die Tische (12) beabstandenden Trägermitteln (24) verbunden sind, die rotatorisch mittels eines Antriebs (25), insbesondere eines Servomotors, antreibbar sind, wobei Verstellmittel zur Parallelisierung der Tische (12) Synchronisierungsmittel (27) umfassen die eine Rotationsbewegung der Tische (12) relativ zu den Trägermitteln (24) mit einer Rotationsbewegung der Trägermittel (24) um eine Rotationsachse (26), koppelnd ausgebildet sind, wobei die Synchronisierungssmittel (27) vorzugsweise eine Riemenanordnung und/oder eine Königswellenanordnung und/oder einen Spindeltrieb mit Kulissenführung, und/oder von einen Antrieb (25) der Trägermittel (24) separate, insbesondere elektromotorische, Antriebe (25) für die Tische (12) und/oder eine Parallelschwingenanordnung und/oder eine Zahnradanordnung umfassen.

12. Verpackungsvorrichtung nach einem der Ansprüche 7 bis 11,
**dadurch gekennzeichnet,**
**dass** zusätzlich zu den ersten Ablagemitteln (18) von den Entnahmemitteln (4) gebildete oder von diesen separate, von den Steuermitteln (9) ansteuerbare zweite Ablagemittel (5) zum Ablegen von K Kunststoffspritzgussteilen (8), vor dem Verteilen auf die U Untergruppen (7) in der Ablageebene, in einem, bevorzugt in einer Zwischenpuffer-Beladeposition (ZB) befindlichen, Zwischenpuffer vorgesehen sind, und dass aus dem Zwischenpuffer, insbesondere mit Hilfe von den ersten Ablagemitteln (5) durch entsprechende Ansteuerung K Kunststoffspritzgussteile (8) entnehmbar und auf die U Untergruppen (7) auf dem, die mindestens eine Endverpackung tragenden oder als Zwischenspeicher ausgebildeten, Tisch verteilbar sind.

13. Verpackungsvorrichtung nach Anspruch 12,
**dadurch gekennzeichnet,**
**dass** der Zwischenpuffer mit Hilfe von Verstellmitteln, insbesondere in einer translatorischen oder rotatorischen Bewegung aus einer Zwischenpuffer-Beladeposition (ZB) in ein, vorzugsweise entlang einer Horizontalachse oder entlang einer Vertikalachse, von der Zwischenpuffer-Beladeposition (ZB) beabstandete Zwischenpuffer-Entnahmeposition (ZE) verstellbar ist, in der aus dem Zwischenpuffer K Kunststoffspritzgussteile (8), insbesondere mittels der ersten Ablagemittel (5) durch entsprechende Ansteuerung über die Steuermittel entnehmbar und auf die U Untergruppen (7) auf dem in der Zwischenpuffer-Beladeposition (ZB) befindlichen Tisch (12) verteilbar sind.

14. Spritzgussanlage mit einer K Kavitäten (3) zur gleichzeitigen Herstellung von K als Pipettenspitzen oder medizinische Reaktionsgefäße ausgebildeten Kunststoffspritzgussteilen (8) aufweisenden Spritzgussvorrichtung (1) und mit einer Verpackungsvorrichtung (16) nach einem der Ansprüche 7 bis 13.

15. Spritzgussanlage nach Anspruch 14,
**dadurch gekennzeichnet,**
**dass** der Verpackungsvorrichtung (16) eine Umverpackungsvorrichtung nachgeordnet ist, mit der die mittels der Verpackungsvorrichtung (16) befüllten Endverpackungen einzeln oder in Gruppen in eine Umverpackung, insbesondere aus Pappe oder Kunststoff, verpackbar sind.

## Claims

1. A packaging method for the packaging of plastic injection moulded parts (8), configured as pipette tips or as medical reaction vessels, in final packaging units (6), comprising the steps:
- simultaneous removal of K injection moulded parts from K cavities,
- simultaneous deposit of the K plastic injection moulded parts (8), uniformly distributed on U subgroups (7) with the aid of first deposit means (5) comprising a gripper, in a preferably horizontal deposit plane,
- multiple removal of K injection moulded parts from the K cavities and uniform distribution of the K injection moulded parts onto the U subgroups (7), until every subgroup (7) has L plastic injection moulded parts (8), wherein the number L of plastic injection moulded parts (8) of a subgroup (7) corresponds to the number A of the maximum number of plastic injection moulded parts (8) able to be received in a final packaging unit (6, 20), or to an integral submultiple of A,
- filling of at least one final packaging unit (6, 20) with A plastic injection moulded parts (8),
**characterized in that**
the distributing of the K plastic injection moulded parts (8) onto the subgroups takes place on a table (12), situated in a loading position (13), of a shuttle table arrangement comprising several tables (12), which after each subgroup (7) has been filled with L plastic injection moulded parts is moved from the loading position (13) into a removal position (14) spaced apart from the loading position along the vertical axis, wherein the tables (12) of the shuttle table arrangement are moved in a coupled movement along the vertical axis (15), such that always one of the tables (12) is situated in the loading position (13), when another of the tables (12) is situated in the removal position (14), wherein the tables (12) situated in the removal position (14) and in the loading position (10) lie vertically in an alignment, at least in certain sections.

2. The packaging method according to Claim 1,
**characterized in that**
the table (12) is constructed as an intermediate store (17), from which simultaneously a single final packaging unit or from which simultaneously several final packaging units (6, 20) are loaded, and that the table (12) constructed as intermediate store (17) has a plurality of deposit positions arranged adjacent to one another in a deposit plane, and that K plastic injection moulded parts (8) are removed from the K cavities and simultaneously are distributed onto the U subgroups (7) in the intermediate store (17) until each subgroup (7) has L plastic injection moulded parts (8), wherein the number L of plastic injection moulded parts (8) of a subgroup (7) corresponds to the number A of maximum plastic injection moulded parts (8) able to be loaded into a final packaging unit (6, 20) or to an integral submultiple of A,
or,
that at least one, preferably several, final packaging units is/are arranged on the table, and the distributing of the K plastic injection moulded parts (8) onto the subgroups (7) takes place exclusively during filling of the at least one final packaging unit (6) in the at least one final packaging unit (6) arranged on the table situated in the loading position, and that plastic injection moulded parts (8) are distributed onto the subgroups (7) until the at least one final packaging unit (6) is completely filled with A plastic injection moulded parts (8).

3. The method according to Claim 2,
**characterized in that**
the K plastic injection moulded parts (8) are deposited on the table (12), constructed as intermediate store (17), such that the number U of the subgroups (7) does not correspond or corresponds to the number V of the final packaging units (6, 20) or to an integral multiple of V.

4. The method according to one of Claims 2 or 3,
**characterized in that**
as table (12) (intermediate store (17)) a plate with a number of depressions or insertion elements corresponding to the deposit positions is used.

5. The packaging method according to one of the preceding claims,
**characterized in that**
the tables (12) are moved in a rotatory movement along the vertical axis (15).

6. The packaging method according to one of the preceding claims,
**characterized in that**
the tables (12) are moved in the coupled movement along the vertical axis such that the tables (12) during the displacement movement remain aligned parallel and preferably horizontally, to one another.

7. A packaging device for the packaging of plastic injection moulded parts (8), configured as pipette tips or as medical reaction vessels, in final packaging units (6, 20), in particular constructed for carrying out a packaging method according to one of the preceding claims, comprising:
- removal means (4) constructed for the simultaneous removing of K injection moulded parts form K cavities (3),
- first deposit means (5), comprising a gripper, for the simultaneous depositing of the K plastic injection moulded parts (8) distributed uniformly on U subgroups (7),
- feed means (22) for the feeding of final packaging units (6, 20) and discharge means (23) for the discharging of filled packaging units from the packaging device (16),
- means for filling at least one final packaging unit (6, 20) with A plastic injection moulded parts (8),
- control means (9) for controlling the removal means (4) and/or the first deposit means (18), which are constructed controlling these such that K injection moulded parts are able to be removed several times from the K cavities (3) and are able to be distributed uniformly onto the U subgroups (7) until each subgroup has L plastic injection moulded parts (8), wherein the number L of plastic injection moulded parts (8) of a subgroup (7) corresponds to the number A of the maximum number of plastic injection moulded parts (8) able to be received in a final packaging unit (6, 20), or to an integral submultiple of A,
**characterized in that**
a shuttle table arrangement is provided with several tables (12), wherein the packaging device is configured such that on a table (12), arranged in a loading position (13), of the tables (12) of the shuttle table arrangement, the depositing of the K plastic injection moulded parts in the subgroups takes place and that the table (12), after the loading of each subgroup with L plastic injection moulded parts, is moved from the loading position (13) into a removal position (14) spaced apart from the loading position (13) along a vertical axis, and that the tables (12) are moved in a coupled movement along the vertical axis (15), that the tables (12) are moved with the aid of the displacement means in a coupled manner such that always one of the tables (12) is situated in the loading position (13), when another of the tables (12) is situated in the removal position (14), wherein the tables (12) situated in the removal position (14) and in the loading position (13) lie vertically in an alignment, at least in certain sections.

8. The packaging device according to Claim 7,
**characterized in that**
the at least one table (12) is constructed as an intermediate store (17), from which simultaneously a single final packaging unit or from which simultaneously several final packaging units (6, 20) are able to be loaded, and that the table (12), constructed as intermediate store (17), has a plurality of deposit positions arranged adjacent to one another in an in particular horizontal deposit plane, and that the control means are constructed controlling the removal means and/or the first deposit means (18) such that K plastic injection moulded parts (8) are removed from the K cavities and are able to be distributed uniformly onto the U subgroups (7) in the intermediate store (17) until each subgroup (7) has L plastic injection moulded parts (8), wherein the number L of plastic injection moulded parts (8) of a subgroup (7) corresponds to the number A of maximum plastic injection moulded parts able to be loaded into a final packaging unit (6, 20), or to an integral submultiple of A,
or,
that on the table (12) at least one, preferably several final packaging units is/are arranged and/or able to be arranged, and that the control means are constructed controlling the first deposit means (18) such that the distributing of the K plastic injection moulded parts (8) onto the subgroups (7) exclusively (filling of the at least one final packaging unit (6), situated on the table (12), takes place in the final packaging unit (6) and that control means controlling the first deposit means are constructed such that plastic injection moulded parts (8) are distributed onto the subgroups (7) until the at least one final packaging unit (6) situated on the table (12) is completely filled with A plastic injection moulded parts (8).

9. The packaging device according to one of Claims 7 or 8,
**characterized in that**
the tables (12), in particular exclusively two tables (12) or more than two tables (12), are movable in a coupled manner along the vertical axis (15) such that the tables (12) during the entire movement have an identical angle to the vertical, in particular remain aligned horizontally.

10. The packaging device according to Claim 9,
**characterized in that**
the coupled movement is realized as a rotary movement.

11. The packaging device according to one of Claims 7 to 10,
**characterized in that**
the tables (12) are connected articulatedly with carrier means (24) spacing the tables (12), which carrier means are able to be driven in a rotatory manner by means of a drive (25), in particular a servomotor, wherein displacement means for parallelization of the tables (12) comprise synchronizing means (27), which are configured coupling a rotary movement of the tables (12) relative to the carrier means (24) with a rotary movement of the carrier means (24) about a rotation axis (26), wherein the synchronizing means (27) preferably comprise a belt arrangement and/or a vertical shaft arrangement and/or a spindle drive with connecting link guide, and/or, in particular electromotive, drives (25), separate from a drive (25) of the carrier means (24), for the tables (12), and/or a parallel rocker arrangement and/or a toothed wheel arrangement.

12. A packaging device according to one of Claims 7 to 11,
**characterized in that**
in addition to the first deposit means (18), second deposit means (5), formed by the removal means (4) or separate therefrom, able to be controlled by the control means (9), are provided for the depositing of K plastic injection moulded parts (8), before the distributing onto the U subgroups (7) in the deposit plane, in an intermediate buffer, preferably situated in an intermediate buffer loading position (ZB), and that K plastic injection moulded parts (8) are able to be removed from the intermediate buffer, in particular with the aid of the first deposit means (5) by corresponding control, and are able to be distributed onto the U subgroups (7) on the table carrying the at least one final packaging or constructed as intermediate store.

13. The packaging device according to Claim 12,
**characterized in that**
the intermediate buffer is able to be moved by means of displacement means, in particular in a translatory or rotatory movement, from an intermediate buffer loading position (ZB) into an intermediate buffer removal position (ZE) spaced, preferably along a horizontal axis or along a vertical axis, from the intermediate buffer loading position (ZB), in which K plastic injection moulded parts (8) are able to be removed from the intermediate buffer, in particular by means of the first deposit means (5) by corresponding control via the control means, and are able to be distributed onto the U subgroups (7) on the table (12), situated in the intermediate buffer loading position (ZB).

14. An injection moulding installation with an injection moulding device (1) having K cavities (3) for the simultaneous production of K injection moulded parts (8), configured as pipette tips or medical reaction vessels and with a packaging device (16) according to one of Claims 7 to 13.

15. The injection moulding installation according to Claim 14,
**characterized in that**
a secondary packaging device is arranged downstream of the packaging device (16), with which secondary packaging device the final packagings filled by means of the packaging device (16) are able to be packaged individually or in groups into a secondary packaging, in particular of cardboard or plastic.

## Revendications

1. Procédé d'emballage destiné à emballer des pièces (8) en matière plastique moulées par injection, conçues en tant que pointes de pipettes ou récipients de réaction médicaux dans des unités d'emballage (6) final, comprenant les étapes:
- prélèvement simultané de K pièces moulées par injection dans K cavités,
- dépose simultanée des K pièces (8) en matière plastique moulées par injection, régulièrement réparties dans U sous-groupes (7) à l'aide de premiers moyens de dépose (5) comprenant un preneur, dans un plan de dépose de préférence horizontal,
- prélèvement multiple de K pièces moulées par injection dans les K cavités et répartition régulière des K pièces moulées par injection dans les U sous-groupes (7), jusqu'à ce que chaque sous-groupe (7) comporte L pièces (8) en matière plastique moulées par injection, le nombre L des pièces (8) en matière plastique moulées par injection d'un sous-groupe (7) correspondant au nombre A des pièces (8) en matière plastique moulées par injection susceptibles d'être logées au maximum dans une unité (6, 20) d'emballage final ou à un diviseur entier de A,
- remplissage d'au moins une unité (6, 20) d'emballage final avec A pièces (8) en matière plastique moulées par injection
**caractérisé en ce**
**que** la répartition des K pièces (8) en matière plastique moulées par injection dans les sous-groupes s'effectue sur une table (12) se trouvant dans une position de chargement (13) d'un agencement de tables interchangeables comprenant plusieurs tables (12), qui après que chaque sous-groupe (7) ait été rempli avec L pièces en matière plastique moulées par injection est déplacée de la position de chargement (13) dans une position de prélèvement (14) écartée de la position de chargement le long de l'axe vertical, les tables (12) de l'agencement de tables interchangeables étant déplacées dans un mouvement couplé le long de l'axe vertical (15) de telle sorte que l'une des tables (12) se trouve toujours dans la position de chargement (13) lorsqu'une autre des tables (12) se trouve dans la position de prélèvement (14), les tables (12) qui sont dans la position de prélèvement (14) et dans la position de chargement (10) se situant verticalement, au moins en partie dans un alignement.

2. Procédé d'emballage selon la revendication 1,
**caractérisé en ce**
**que** la table (12) est conçue sous la forme d'un accumulateur tampon (17), à partir duquel simultanément une seule ou à partir duquel simultanément plusieurs unités d'emballage (6, 20) final sont chargées et en ce que le table (12) conçue sous la forme d'accumulateur tampon (17) comporte une pluralité de positions de dépose placées côte à côte dans un plan de dépose et en ce que pendant ce temps, K pièces (8) en matière plastique moulées par injection sont prélevées dans les K cavités et réparties régulièrement dans les U sous-groupes (7) dans l'accumulateur tampon (17) jusqu'à ce que chaque sous-groupe (7) comporte L pièces (8) en matière plastique moulées par injection, le nombre L des pièces (8) en matière plastique moulées par injection d'un sous-groupe (7) correspondant au nombre A des pièces (8) en matière plastique moulées par injection susceptibles d'être chargées au maximum dans une unité d'emballage (6, 20) final ou à un diviseur entier de A,
ou en ce
**que** sur la table, on place au moins une, de préférence plusieurs unités d'emballage final et la répartition des K pièces (8) en matière plastique moulées par injection sur les sous-groupes (7) s'effectue exclusivement lors du remplissage de l'au moins une unité d'emballage (6) final dans l'au moins une unité d'emballage (6) final placée sur la table se trouvant dans la position de chargement et en ce que pendant ce temps, des pièces (8) en matière plastique moulées par injection sont réparties sur les sous-groupes (7), jusqu'à ce que l'au moins une unité d'emballage (6) final soit totalement remplie de A pièces (8) en matière plastique moulées par injection.

3. Procédé selon la revendication 2,
**caractérisé en ce**
**que** les K pièces (8) en matière plastique moulées par injection sont déposées sur la table (12) conçue sous la forme d'accumulateur tampon (17) de telle sorte que le nombre U des sous-groupes (7) ne corresponde pas ou corresponde au nombre V des unités d'emballage (6, 20) final ou à un multiple entier de V.

4. Procédé selon l'une quelconque des revendications 2 ou 3,
**caractérisé en ce**
**qu'**en tant que table (12) (accumulateur intermédiaire (17)), on utilise une plaque avec un nombre de creux ou d'éléments d'emboîtement correspondant aux positions de dépose.

5. Procédé d'emballage selon l'une quelconque des revendications précédentes,
**caractérisé en ce**
**qu'**on déplace les tables (12) dans un mouvement rotatif le long de l'axe vertical (15).

6. Procédé d'emballage selon l'une quelconque des revendications précédentes,
**caractérisé en ce**
**qu'**on déplace les tables (12) dans le mouvement couplé le long de l'axe vertical de telle sorte que pendant le mouvement de déplacement, les tables (12) restent orientées à la parallèle et de préférence à l'horizontale les unes par rapport aux autres.

7. Dispositif d'emballage destiné à emballer des pièces (8) en matière plastique moulées par injection conçues en tant que pointes de pipettes ou récipients de réaction médicaux dans des unités d'emballage (6, 20) final, notamment conçu pour réaliser un procédé d'emballage selon l'une quelconque des revendications précédentes, comprenant :
- des moyens de prélèvement (4), conçus pour prélever simultanément K pièces moulées par injection dans K cavités (3),
- des premiers moyens de dépose (5) conçus pour déposer simultanément les K pièces (8) en matière plastique moulées par injection réparties régulièrement sur U sous-groupes (7), comprenant un preneur,
- des moyens d'alimentation (22) pour alimenter des unités d'emballage (6, 20) final, ainsi que des moyens d'évacuation (23) pour évacuer des unités d'emballage remplies hors du dispositif d'emballage (16),
- des moyens pour remplir au moins une unité d'emballage (6, 20) final avec A pièces (8) en matière plastique moulées par injection,
- des moyens de commande (9) pour activer les moyens de prélèvement (4) et/ou les premiers moyens de dépose (18), qui sont conçus pour activer ces derniers de sorte qu'à plusieurs reprises, K pièces moulées par injection puissent être prélevées dans les K cavités (3) et réparties régulièrement sur les U sous-groupes (7), jusqu'à ce que chaque sous-groupe comporte L pièces (8) en matière plastique moulées par injection, le nombre L des pièces (8) en matière plastique moulées par injection d'un sous-groupe (7) correspondant au nombre A des pièces (8) en matière plastique moulées par injection susceptibles d'être logées au maximum dans une unité d'emballage (6, 20) final ou à un diviseur entier de A,
**caractérisé en ce**
**qu'**il est prévu un agencement de tables interchangeables avec plusieurs tables (12), le dispositif d'emballage étant configuré de telle sorte que sur une table (12) des tables (12) de l'agencement de tables interchangeables qui est placée dans une position de chargement (13), il s'effectue la dépose des K pièces en matière plastique moulées par injection dans les sous-groupes et en ce qu'après le chargement de chaque sous-groupe avec L pièces en matière plastique moulées par injection, la table (12) est déplacée à partir de la position de chargement (13) dans une position de prélèvement (14) écartée de la position de chargement (13) le long d'un axe vertical et en ce que les tables (12) sont déplacées dans un mouvement couplé le long de l'axe vertical (15), en ce que les tables (12) sont déplacées à l'aide des moyens de déplacement en étant couplées de telle sorte que l'une des tables (12) se trouve toujours dans la position de chargement (13), lorsqu'une autre des tables (12) se trouve dans la position de prélèvement (14), les tables (12) qui se trouvent dans la position de prélèvement (14) et dans la position de chargement (13) se situant verticalement au moins en partie dans un alignement.

8. Dispositif d'emballage selon la revendication 7
**caractérisé en ce**
**que** l'au moins une table (12) est conçue en tant qu'accumulateur tampon (17), à partir duquel simultanément une seule ou à partir duquel simultanément plusieurs unités d'emballage (6, 20) final sont susceptibles d'être chargées et en ce que la table (12) conçue en tant qu'accumulateur tampon (17) comporte une pluralité de positions de dépose placées côte à côte dans un plan de dépose, notamment horizontal, et en ce que les moyens de commande sont conçus pour activer les moyens de prélèvement et/ou les premiers moyens de dépose (18) de telle sorte que pendant ce temps, K pièces (8) en matière plastique moulées par injection sont prélevées dans les K cavités et susceptibles d'être réparties régulièrement sur les U sous-groupes (7) dans l'accumulateur tampon (17) jusqu'à ce que chaque sous-groupe (7) comporte L pièces (8) en matière plastique moulées par injection, le nombre L des pièces (8) en matière plastique moulées par injection d'un sous-groupe (7) correspondant au nombre A de pièces en matière plastique moulées par injection susceptibles d'être chargées au maximum dans une unité d'emballage (6, 20) final ou à un diviseur uniquement entier de A,
ou en ce
**qu'**au moins une, de préférence plusieurs unités d'emballage final est/sont placée(s) et/ou susceptible(s) d'être placée(s) sur la table (12) et en ce que les moyens de commande sont conçus pour activer les premiers moyens de dépose (18) de telle sorte que la répartition (remplissage de l'au moins une unité d'emballage (6) final se trouvant sur la table (12)) des pièces (8) en matière plastique moulées par injection sur les sous-groupes (7) s'effectue uniquement dans l'unité d'emballage (6) final et en ce que des moyens de commande sont conçus pour activer les premiers moyens de dépose de telle sorte, que des pièces (8) en matière plastique moulées par injection soient réparties sur les sous-groupes (7) jusqu'à ce que l'au moins une unité d'emballage (6) final se trouvant sur la table (12) soit totalement remplie de A pièces (8) en matière plastique moulées par injection.

9. Dispositif d'emballage selon l'une quelconque des revendications 7 ou 8,
**caractérisé en ce**
**que** les tables (12), notamment exclusivement deux tables (12) ou plus de deux tables (12) sont susceptibles d'être déplacées en étant couplées de telle sorte le long de l'axe vertical (15) que pendant l'ensemble du mouvement, les tables (12) présentent un même angle par rapport à la verticale, notamment restent orientées à l'horizontale.

10. Dispositif d'emballage selon la revendication 9,
**caractérisé en ce**
**que** le mouvement couplé est réalisé sous la forme d'un mouvement de rotation.

11. Dispositif d'emballage selon l'une quelconque des revendications 7 à 10,
**caractérisé en ce**
**que** les tables (12) sont reliées de manière articulée avec des moyens porteurs (24) écartant les tables (12), qui sont susceptibles d'être entraînés en rotation au moyen d'un entraînement (25), notamment d'un servomoteur, des moyens de déplacement pour la parallélisation des tables (12) comprenant des moyens de synchronisation (27) qui sont conçus de façon à coupler un mouvement de rotation des tables (12) par rapport aux moyens porteurs (24) avec un mouvement de rotation des moyens porteurs (24) autour d'un axe de rotation (26), les moyens de synchronisation (27) comprenant de préférence un agencement de courroies et/ou un agencement d'arbres de renvoi et/ou un mécanisme à vis avec guidage par coulisse et/ou des entraînements (25), notamment électromotorisés pour les tables (12) séparés d'un entraînement des moyens porteurs (24), et/ou un agencement de bielles parallèles et/ou un agencement de roues dentées.

12. Dispositif d'emballage selon l'une quelconque des revendications 7 à 11,
**caractérisé en ce**
**qu'**en supplément des premiers moyens de dépose (18) sont prévus des deuxièmes moyens de dépose (5), formés par les moyens de prélèvement (4) ou séparés de ces derniers, activables par les moyens de commande (9) pour déposer K pièces (8) en matière plastique moulées par injection avant la répartition sur les U sous-groupes (7), dans le plan de dépose, dans un tampon intermédiaire se trouvant de préférence dans une position (ZB) de chargement de tampon intermédiaire et en ce que notamment à l'aide des premiers moyens de dépose (5), par une activation correspondante, K pièces (8) en matière plastique moulées par injection sont susceptibles d'être prélevées dans le tampon intermédiaire et d'être réparties dans les U sous-groupes (7) sur la table portant l'au moins un emballage final ou conçue en tant qu'accumulateur intermédiaire.

13. Dispositif d'emballage selon la revendication 12,
**caractérisé en ce**
**qu'**à l'aide de moyens de déplacement, le tampon intermédiaire est déplaçable, notamment dans un mouvement de translation ou de rotation d'une position (ZB) de chargement de tampon intermédiaire dans une position (ZE) de prélèvement dans le tampon intermédiaire écartée de la position (ZB) de chargement du tampon intermédiaire, de préférence le long d'un axe horizontal ou le long d'un axe vertical, dans laquelle K pièces (8) en matière plastique moulées par injection sont susceptibles d'être prélevées dans le tampon intermédiaire, notamment au moyen des premiers moyens de dépose (5), par une activation correspondante par l'intermédiaire des moyens de commande et d'être réparties sur les U sous-groupes (7) sur la table (12) qui se trouve dans la position (ZB) de chargement du tampon intermédiaire.

14. Installation de moulage par injection avec un dispositif (1) de moulage par injection comportant K cavités (3), pour la fabrication simultanée de K pièces (8) en matière plastique moulées par injection, conçues en tant que pointes de pipettes ou récipients de réaction médicaux et avec un dispositif d'emballage (16) selon l'une quelconque des revendications 7 à 13.

15. Installation de moulage par injection selon la revendication 14,
**caractérisée en ce**
**qu'**en aval du dispositif d'emballage (16) est monté un dispositif de suremballage, à l'aide duquel les emballages finaux remplis au moyen du dispositif d'emballage (16) sont susceptibles d'être emballés un à un ou en groupes dans un suremballage, notamment en carton ou en matière plastique.
